# EUROPEAN PATENT APPLICATION

(11) **EP 4 550 308 A1**
(43) Date of publication of application: **07.05.2025**
(21) Application number: 23831361.3
(22) Date of filing: 26.06.2023
(51) Int. Cl.: G10K 11/172, B60R 13/08, G10K 11/16, G10K 11/162

(54) **SOUND INSULATION STRUCTURE AND SOUNDPROOF STRUCTURE**

(30) Priority: 28.06.2022 JP 2022103489; 14.09.2022 JP 2022146129; 24.02.2023 JP 2023027166
(71) Applicant: Mitsui Chemicals, Inc., Tokyo 104-0028 (JP)
(72) Inventor: KUMEDA, Kenta, Sodegaura-shi, Chiba 299-0265 (JP); NAKASHIMA, Tomonori, Sodegaura-shi, Chiba 299-0265 (JP); KUSAKA, Mao, Sodegaura-shi, Chiba 299-0265 (JP); FUKUYAMA, Naoki, Sodegaura-shi, Chiba 299-0265 (JP)
(74) Representative: J A Kemp LLP
(86) International application number: PCT/JP2023/023500
(87) International publication number: WO 2024/004919

(57) **Abstract**

Sound insulation structure 1 comprises elastic membrane part 2, elastic support wall part 3 standing on membrane part 2, and weight parts 4 standing on membrane part 2. Membrane part 2 is divided into a plurality of compartments 5 by support wall part 3. Weight parts 4 are located inside some or all of the plurality of compartments 5. In compartments 5 in which weight parts 4 are located, one weight part 4 is disposed in one compartment 5. Height H1 of support wall part 3 extending in a direction perpendicular to membrane part 2 is greater than height H2 of weight parts 4 extending in the direction perpendicular to membrane part 2. Each of weight parts 4 constitutes a spring mass resonator having spring part 4a having elasticity and mass part 4b having a mass greater than that of spring part 4a. Sound insulation structure 1 provides sufficient sound insulation, can be easily and stably mounted on a curved support surface, and is thin and lightweight. Soundproof structure 11 comprises soundproof plate part 10 and sound insulation part 9 that comprises sound insulation structure 1. At least one of membrane part 2 and support wall part 3 is integrally formed with or is joined with soundproof plate part 10, and soundproof plate part 10 and sound insulation part 9 are positioned side by side in a plane.

## Description

### Technical Field

The present invention relates to a sound insulation structure and a soundproof structure.

### Background Art

In recent years, there has been a demand for quietness suitable for indoor environments within rooms of buildings such as apartment buildings, office buildings, and hotels that is achieved by blocking out both outdoor noise from outside the building caused by, for example, automobiles, trains, aircraft, and ships, as well as indoor noise caused by equipment noise and human voices from outside a room within the building. Furthermore, in the interior of vehicles such as automobiles, trains, aircraft, and ships, it is desirable to reduce noise such as wind noise and engine noise and thus provide a quiet and comfortable space for the occupants. For this reason, there is a demand for a means such as a component with high soundproofing properties for blocking the transmission of noise and vibration from outside to inside a building or vehicle. In recent years, there has been a demand for lightweight soundproofing materials in buildings due to the increasing number of taller buildings. In addition, there is a demand for lightweight soundproofing materials in vehicles to improve energy efficiency. Examples of soundproof structures for forming soundproof walls in vehicles and buildings are disclosed in Patent Documents 1 to 6.

Patent Documents 1 and 2 disclose dash silencers (also called dash insulators) for automobiles. These dash silencers are disposed on a dash panel (dashboard) located at the boundary between the engine compartment and the passenger compartment and serve to prevent noise from entering the passenger compartment from the engine compartment. The dash silencer has a single-layer or multi-layer structure that includes felt or urethane foam as a sound-absorbing material.

The invention described in Patent Document 3 provides an acoustic damping panel comprising a rigid frame divided into a number of individual cells, a sheet of flexible material, and a number of weights, each of which is fixed to the sheet of flexible material so that each cell is provided with its own weight. The attenuated sound is controlled by proper selection of the mass of the weight.

In the invention described in Patent Document 4, in a soundproofing material having an elastic sheet and a support part that both holds the sheet and divides the sheet into a number of compartments, the relationship between the rigidity of the sheet in the compartments and the area density of the sheet are specified.

The sound insulation material of the invention described in Patent Document 5 is a structure including a flat substrate part and a plurality of resonating parts connected to the substrate part and having a predetermined resonant frequency. Each of the plurality of resonating parts has a weight part and a connecting part that connects the weight part to the substrate part. In a projection view seen from a direction perpendicular to the substrate part, the center of gravity of the resonating part is configured to be located outside the joint area between the substrate part and the connecting part.

The vibration reduction device of the invention described in Patent Document 6 has an acoustic metastructure that is attached to a vehicle body and that blocks vibrations transmitted through the vehicle body. The device includes a cross-shaped frame that is attached to the vehicle body and divides a certain space into certain regions, and vibrators that are configured at the corners of each region divided by the frame and that have their own natural frequencies to block vibrations transmitted from the vehicle body through the frame.

### Prior Art Documents

### Patent Documents

Patent Document 1: JP 2007-210381 A
Patent Document 2: JP 2018-012353 A
Patent Document 3: JP 2005-250474 A
Patent Document 4: International Publication No. WO2019/022245
Patent Document 5: JP 2021-152584 A
Patent Document 6: JP 2020-91481 A

### Summary of the Invention

### Problem to Be Solved by the Invention

The dash silencers described in Patent Documents 1 and 2 are unable to sufficiently reduce noise entering the vehicle interior. In particular, a high level of road noise is transmitted from the ground into the vehicle cabin and may complicate the provision of a quiet and comfortable space for the occupants.

The sound-damping panel described in Patent Document 3 has a rigid frame that is not flexible. Since vibrations are transmitted to the sheet through this rigid frame, there is a risk that sufficient soundproofing properties may not be achieved. Furthermore, if the support surface on which the rigid frame is placed is curved or has irregularities, the sound-damping panel may not be held stably. In particular, since the panels of typical vehicles (e.g., automobiles) have many curved or uneven portions, the simple use of the acoustic damping panel of Patent Document 3 as a sound insulation material may be complicated in vehicles. Furthermore, a rigid frame has a large mass, and the increase in mass due to sound insulation materials in a vehicle may also be problematic.

The soundproofing material described in Patent Document 4 has a high support portion, i.e., the height extending from the sheet in a direction perpendicular to the sheet is preferably 25 mm or more. In order for such a tall support portion to stably support the sheet, the support portion is preferably rigid. As a result, vibrations will be transmitted via the support portion, raising the risk that sufficient sound insulation will not be obtained. Soundproofing materials are difficult to install on curved or uneven surfaces such as on vehicle (e.g., automobile) panels. Furthermore, tall support parts cause the entirety of the soundproofing material to become bulkier and heavier. When soundproofing material is placed on, for example, the panel of a vehicle, the material will take up a large space inside the vehicle, thereby reducing space efficiency and potentially interfering with the installation of other components or becoming a nuisance to occupants.

In the sound insulation material described in Patent Document 5, the resonating portion, which is the functional portion that provides the sound insulation effect, is exposed without being covered by a support wall part or the like. If this resonating portion comes into contact with another member or with an occupant, the sound insulation properties may be reduced or changed. Therefore, a large space must be provided around the resonator, and this requirement reduces space efficiency.

The vibration reduction device described in Patent Document 6 does not have a membrane part but is composed of a plurality of vibrators and a frame connecting them. Therefore, similar to the sound insulation material of Patent Document 5, the vibrator that is the functional part that produces the sound insulation effect is exposed. As a result, the sound insulation properties may be reduced or altered if the vibrator comes into contact with other members or an occupant. Furthermore, the frame must have rigidity in order to ensure a minimum structural strength of the vibration reduction device. As a result, vibrations will be transmitted through the frame and sufficient sound insulation may not be achieved. Mounting the vibration reduction device of Patent Document 6 on a curved or uneven mounting surface such as the panel of a vehicle (for example, an automobile) is problematic.

Therefore, an object of the present invention is to provide a thin and lightweight sound insulation structure that can provide a sufficient sound insulation effect, that can be easily and stably mounted on a curved or uneven support surface such as the panel of a building, mechanical device, or vehicle (e.g., an automobile), and that has good sound insulation properties, particularly in the low-frequency range of 1000 Hz or less, and a soundproof structure that includes the sound insulation structure.

### Means for Solving the Problem

The first sound insulation structure of the present invention comprising an elastic membrane part, an elastic support wall part standing on the membrane part, and weight parts standing on the membrane part, characterized in that: the membrane part is divided into a plurality of compartments by the support wall part; the weight parts are located inside some or all of the plurality of compartments; in the compartments in which the weight parts are located, one weight part is disposed in one compartment; the height of the support wall part extending in a direction perpendicular to the membrane part is greater than the height of the weight parts extending in the direction perpendicular to the membrane part; and each of the weight parts constitutes a spring mass resonator having a spring part having elasticity and a mass part having a mass greater than that of the spring part.

Note that elasticity here refers to the property of a solid substance that has been deformed by an external force to return to its original shape when the external force is removed and includes energy elasticity and rubber elasticity (entropy elasticity). Here, the term "having elasticity" means that the material has at least one of energy elasticity and rubber elasticity (entropy elasticity).

The support wall part and the spring parts may be made of a material that has rubber elasticity but no energy elasticity, a material that has energy elasticity but no rubber elasticity, or a material that has both rubber elasticity and energy elasticity. Similarly, the membrane part may be made of a material that has rubber elasticity but no energy elasticity, a material that has energy elasticity but no rubber elasticity, or a material that has both rubber elasticity and energy elasticity.

The membrane part, the support wall part, and the spring parts may all have a dynamic storage modulus that is not less than 0.01 MPa and not more than 100 MPa at 23 degrees C and at a frequency of 1 Hz to 1000 Hz. Moreover, the membrane part, the support wall part, and the spring parts may all have a loss tangent that is not less than 0.01 and not more than 0.50 at 23 degrees C and at a frequency of 1 Hz to 1000 Hz.

Specifically, the elasticity of the membrane part, support wall part, and spring parts is evaluated by measuring the frequency dependence in the tensile or compression mode using a dynamic viscoelasticity measuring device in accordance with JIS K7244 and by determining the dynamic storage modulus (E') based on a master curve at 23 degrees C. The dynamic storage modulus (E') at 23 degrees C and at a frequency of 1 Hz to 1000 Hz is 0.01 MPa or more and 100 MPa or less. Further, more preferably, both the membrane part and the support wall part may be made of an elastic body having a dynamic storage modulus (E') of 0.05 MPa or more and 50 MPa or less at 23 degrees C and at a frequency of 1 Hz to 1000 Hz, and having a loss tangent of 0.05 or more and 0.45 or less at 23 degrees C and at a frequency of 1 Hz to 1000 Hz.

The spring part of each weight part may be located on the side to which the membrane part is attached, and the mass part may be located on the side opposite the side to which the membrane part is attached.

The mass part of each weight part may have a larger volume than the spring part.

The mass part of each weight part may be made of a material having a higher density than the spring part.

The second sound insulation structure of the present invention comprises an elastic membrane part, an elastic support wall part standing on the membrane part, and weight parts standing on the membrane part, characterized in that: the membrane part is divided into a plurality of compartments by the support wall part; the weight parts are located inside some or all of the plurality of compartments; in the compartments in which the weight parts are located, one weight part is disposed in one compartment; the height of the support wall part extending in a direction perpendicular to the membrane part is greater than the height of the weight parts extending in the direction perpendicular to the membrane part; and a spring-mass resonator is formed by the membrane part as a spring part and by the weight part as a mass part.

The support wall part may be made of either a material that has rubber elasticity but no energy elasticity, a material that has energy elasticity but no rubber elasticity, or a material that has both rubber elasticity and energy elasticity. Similarly, the membrane part may be made of either a material that has rubber elasticity but no energy elasticity, a material that has energy elasticity but no rubber elasticity, or a material that has both rubber elasticity and energy elasticity.

Both the membrane part and the support wall part may have a dynamic storage modulus that is not less than 0.01 MPa and not more than 100 MPa at 23 degrees C and at a frequency of 1 Hz to 1000 Hz. Moreover, both the membrane part and the support wall part have a loss tangent that is not less than 0.01 and not more than 0.50 at 23 degrees C and at a frequency of 1 Hz to 1000 Hz. More preferably, both the membrane part and the support wall part may be made of an elastic body having a dynamic storage modulus (E') of 0.05 MPa or more and 50 MPa or less at 23 degrees C and at a frequency of 1 Hz to 1000 Hz and a loss tangent of 0.05 or more and 0.45 or less at 23 degrees C and at a frequency of 1 Hz to 1000 Hz.

The support wall part may include a plurality of first wall parts extending in a direction perpendicular to the membrane part and extending in a first direction parallel to the membrane part, and a plurality of second wall parts extending in a direction perpendicular to the membrane part and extending in a second direction perpendicular to the first direction.

The area of each of the compartments may be 100 mm² or more and 1000 mm² or less.

The number of the compartments may be 10 or more and 1000 or less per 1000 cm² of the area of the membrane part, and the number of the compartments may be preferably 50 or more and 500 or less.

The support wall part may be in the form of a circular cylinder having a circular, elliptical, or oval cross section that defines each of the compartments, or in the form of a polygonal cylinder having a polygonal cross section that defines each of the compartments, specifically a square, regular pentagon, or regular hexagon.

The plate thickness of the support wall part may be 0.5 mm or more and 5.0 mm or less and may be preferably 1.0 mm or more and 3.0 mm or less.

The membrane thickness of the membrane part may be 0.1 mm or more and 3.0 mm or less.

The height in the direction perpendicular to the membrane part may be 5 mm or more and 20 mm or less.

The height of the support wall part extending in the direction perpendicular to the membrane part may be 5 mm or more and 20 mm or less and may be preferably 10 mm or more and 20 mm or less. The support wall part may have different heights in some portions.

The sound insulation structure may comprise a plurality of the support wall parts, and some of the support wall parts may have a height extending in the direction perpendicular to the membrane part that is greater than the height of the other support wall parts. The height of the tall support wall parts extending in the direction perpendicular to the membrane part may be greater than 10 mm and not greater than 20 mm, and the height of the other support wall parts (the support wall parts that are shorter) may not be greater than 10 mm. The term "tall support wall parts" used herein refers to a support wall part having a height that is higher (by, for example, 1 mm or more) than other support wall parts (lower support wall parts).

The height of the weight parts extending in the direction perpendicular to the membrane part may be 1 mm or more.

The membrane part may have a durometer A hardness of 30 or more, and the support wall part may have a durometer A hardness of 1 or more and 90 or less. The durometer A hardness can be obtained by measurement in accordance with JIS K 6253-3.

A first soundproof structure of the present invention comprising a soundproof plate part and a sound insulation part, characterized in that: the soundproof plate part is a plate member made of a sound-absorbing material or sound insulation material; the sound insulation part comprises the above described first sound insulation structure; and at least one of the membrane part and the support wall part is formed integrally with or is joined to the soundproof plate part such that the soundproof plate part and the sound insulation part are positioned side by side in a plane. The first soundproof structure may have the configuration next described.

The membrane part, the support wall part, and the spring parts may be all made of either a material that has rubber elasticity but no energy elasticity, a material that has energy elasticity but no rubber elasticity, or a material that has both rubber elasticity and energy elasticity.

The membrane part, the support wall part, and the spring parts may all have a dynamic storage modulus that is not less than 0.01 MPa and not more than 100 MPa at 23 degrees C and at a frequency of 1 Hz to 1000 Hz. Moreover, the membrane part, the support wall part, and the spring parts may all have a loss tangent that is not less than 0.01 and not more than 0.50 at 23 degrees C and at a frequency of 1 Hz to 1000 Hz.

Specifically, the elasticity of the membrane part, support wall part, and spring parts is evaluated by measuring the frequency dependence in the tensile or compression mode using a dynamic viscoelasticity measuring device in accordance with JIS K7244 and by determining the dynamic storage modulus (E') based on a master curve at 23 degrees C. The dynamic storage modulus (E') at 23 degrees C and at a frequency of 1 Hz to 1000 Hz is 0.01 MPa or more and 100 MPa or less. Further, more preferably, both the membrane part and the support wall part may be made of an elastic body having a dynamic storage modulus (E') of 0.05 MPa or more and 50 MPa or less at 23 degrees C and at a frequency of 1 Hz to 1000 Hz, and having a loss tangent of 0.05 or more and 0.45 or less at 23 degrees C and at a frequency of 1 Hz to 1000 Hz.

The spring part of each weight part may be located on the side to which the membrane part is attached, and the mass part may be located on the side opposite the side to which the membrane part is attached.

The mass part may have a larger volume than the spring part.

The mass part may be made of a material having a higher density than the spring part.

A second soundproof structure of the present invention comprises a soundproof plate part and a sound insulation part, characterized in that: the soundproof plate part is a plate member made of a sound-absorbing material or sound insulation material; the sound insulation part comprises the above described second sound insulation structure; and at least one of the membrane part and the support wall part is formed integrally with or is joined to the soundproof plate part such that the soundproof plate part and the sound insulation part are positioned side by side in a plane. The second soundproof structure may have the configuration next described.

Both the membrane part and the support wall part may be made of either a material that has rubber elasticity but no energy elasticity, a material that has energy elasticity but no rubber elasticity, or a material that has both rubber elasticity and energy elasticity.

Both the membrane part and the support wall part may have a dynamic storage modulus that is not less than 0.01 MPa and not more than 100 MPa at 23 degrees C and at a frequency of 1 Hz to 1000 Hz. Moreover, both the membrane part and the support wall part have a loss tangent that is not less than 0.01 and not more than 0.50 at 23 degrees C and at a frequency of 1 Hz to 1000 Hz. More preferably, both the membrane part and the support wall part may be made of an elastic body having a dynamic storage modulus (E') of 0.05 MPa or more and 50 MPa or less at 23 degrees C and at a frequency of 1 Hz to 1000 Hz and a loss tangent of 0.05 or more and 0.45 or less at 23 degrees C and at a frequency of 1 Hz to 1000 Hz.

The area occupied by the sound insulation part on the main surface of the soundproof structure may be 5% to 95% of the area of the entire soundproof structure.

The first soundproof structure and the second soundproof structure may have the configuration next described.

The support wall part may include a plurality of first wall parts extending in a direction perpendicular to the membrane part and extending in a first direction parallel to the membrane part, and a plurality of second wall parts extending in a direction perpendicular to the membrane part and extending in a second direction perpendicular to the first direction.

The support wall part may be in the form of a circular cylinder having a circular, elliptical, or oval cross section that defines each of the compartments, or in the form of a polygonal cylinder having a polygonal cross section that defines each of the compartments, specifically a square, regular pentagon, or regular hexagon.

The area of each of the compartments may be 100 mm² or more and 1000 mm² or less.

The number of the compartments may be 10 or more and 1000 or less per 1000 cm² of the area of the membrane part, and the number of the compartments may be preferably 50 or more and 500 or less.

The plate thickness of the support wall part may be 0.5 mm or more and 5.0 mm or less and may be preferably 1.0 mm or more and 3.0 mm or less. The membrane thickness of the membrane part may be 0.1 mm or more and 3.0 mm or less.

The height in the direction perpendicular to the membrane part may be 5 mm or more and 20 mm or less.

The height of the support wall part extending in the direction perpendicular to the membrane part may be 5 mm or more and 20 mm or less and the support wall part may have different heights in some portions.

The height of the weight parts extending in the direction perpendicular to the membrane part may be 1 mm or more.

The membrane part may have a durometer A hardness of 30 or more, and the support wall part may have a durometer A hardness of 1 or more and 90 or less. The durometer A hardness can be obtained by measurement in accordance with JIS K 6253-3.

At least one of the membrane part and the support wall part may be integrally formed with the soundproof plate part by insert molding or may be joined to the soundproof plate part by ultrasonic welding, bonding by an adhesive, bonding by an adhesive tape, or securing by a clip, bolt, staple, or rivet. Alternatively, the soundproof plate part or the sound insulation part may be shaped in such a way that the sound insulation part and the soundproof plate part are joined to each other. For example, a fitting hole may be provided in the soundproof plate part, and the sound insulation part and the soundproof plate part may be joined by simply fitting a part of the membrane part into the fitting hole.

The soundproof plate part may have a single-layer structure consisting of either a layer made of felt, urethane, or glass wool, or a layer made of a resin membrane or a rubber sheet, or may have a multi-layer structure in which these layers are laminated.

The soundproof structure may be attached to a panel inside an automobile. Further, the soundproof structure may be attached to a dash panel, and the sound insulation part may be provided at each of positions that face tires.

### Effect of the Invention

The present invention can provide both a thin and lightweight sound insulation structure that has sufficient soundproofing properties, that can be easily and stably mounted on a curved or uneven support surface such as the panel of a building, mechanical device, or vehicle (e.g., an automobile), and that has good sound insulation properties, particularly in the low-frequency range of 1000 Hz or less, and a soundproof structure that includes the sound insulation structure.

### Brief Description of the Drawings

[FIG. 1A] A perspective view of a sound insulation structure according to a first embodiment of the present invention.
[FIG. 1B] A cross-sectional view taken along line A-A of FIG. 1A.
[FIG. 2A] An exploded perspective view of one compartment of the sound insulation structure shown in FIGS. 1A and 1B.
[FIG. 2B] An exploded front view of one compartment of the sound insulation structure shown in FIGS. 1A and 1B.
[FIG. 3A] A perspective view of a sound insulation structure according to a modification of the first embodiment of the present invention.
[FIG. 3B] A cross-sectional view taken along line A-A of FIG. 3A.
[FIG. 4A] A cross-sectional view of a sound insulation structure according to another modification of the first embodiment of the present invention.
[FIG. 4B] A perspective view of a weight part of the sound insulation structure shown in FIG. 4A.
[FIG. 5A] A cross-sectional view of a sound insulation structure according to still another modification of the first embodiment of the present invention.
[FIG. 5B] A perspective view of a weight part of the sound insulation structure shown in FIG. 5A.
[FIG. 6A] A perspective view of a sound insulation structure according to a second embodiment of the present invention.
[FIG. 6B] A cross-sectional view taken along line A-A of FIG. 6A.
[FIG. 7A] A cross-sectional view of a sound insulation structure according to a modification of the second embodiment of the present invention.
[FIG. 7B] A perspective view of the weight part of the sound insulation structure shown in FIG. 7A.
[FIG. 8A] A plan view showing a schematic representation of one compartment of the sound insulation structure of the present invention.
[FIG. 8B] A plan view showing a schematic representation of a plurality of compartments of the sound insulation structure of the present invention.
[FIG. 9A] A plan view showing a schematic representation of one compartment of another example of a sound insulation structure of the present invention.
[FIG. 9B] A plan view showing a schematic representation of a plurality of compartments of another example of the sound insulation structure of the present invention.
[FIG. 10A] A plan view showing a schematic representation of one compartment of still another example of a sound insulation structure of the present invention.
[FIG. 10B] A plan view showing a schematic representation of a plurality of compartments of still another example of a sound insulation structure of the present invention.
[FIG. 11A] A plan view showing a schematic representation of one compartment of still another example of a sound insulation structure of the present invention.
[FIG. 11B] A plan view showing a schematic representation of a plurality of compartments of still another example of a sound insulation structure of the present invention.
[FIG. 12A] A plan view showing a schematic representation of one compartment of still another example of a sound insulation structure of the present invention.
[FIG. 12B] A plan view showing a schematic representation of a plurality of compartments of still another example of a sound insulation structure of the present invention.
[FIG. 13] A cross-sectional view showing a state in which the sound insulation structure of the first embodiment of the present invention is attached to a metal plate.
[FIG. 14A] A graph showing the sound insulation properties of Working Example 1 of the present invention and Comparative Examples 1 to 3.
[FIG. 14B] A graph showing the sound insulation properties of Working Examples 1 to 3 of the present invention and Comparative Example 3.
[FIG. 14C] A graph showing the sound insulation properties of Working Examples 1 and 4 of the present invention and Comparative Example 4.
[FIG. 14D] A graph showing the sound insulation properties of Working Examples 1 and 5 of the present invention.
[FIG. 14E] A graph showing the sound insulation properties of Working Examples 1 and 6 of the present invention.
[FIG. 14F] A graph showing the sound insulation properties of Working Examples 1, 7, and 8 of the present invention and Comparative Example 3.
[FIG. 14G] A graph showing the sound insulation properties of Working Examples 8 and 9 of the present invention.
[FIG. 14H] A graph showing the sound insulation properties of Working Examples 9 and 10 of the present invention.
[FIG. 14I] A graph showing the sound insulation properties of Working Examples 9 and 11 of the present invention.
[FIG. 14J] A graph showing the sound insulation properties of Working Examples 12 to 14 of the present invention and Comparative Example 5.
[FIG. 14K] A graph showing the sound insulation properties of Working Example 1 of the present invention and Comparative Example 6.
[FIG. 15] A cross-sectional view of the structure of Comparative Example 1.
[FIG. 16A] A perspective view of the sound insulation structure of Comparative Example 3.
[FIG. 16B] A cross-sectional view showing a state in which the sound insulation structure shown in FIG. 16A is attached to a metal plate.
[FIG. 17] A cross-sectional view showing a state in which a sound insulation structure of Working Example 2 of the present invention is attached to a metal plate.
[FIG. 18A] A perspective view of a sound insulation structure of Working Example 3 of the present invention.
[FIG. 18B] A cross-sectional view showing a state in which sound insulation structure shown in FIG. 18A is attached to a metal plate.
[FIG. 19A] A perspective view of a sound insulation structure of Working Example 6 of the present invention.
[FIG. 19B] A cross-sectional view showing a state in which the sound insulation structure shown in FIG. 19A is attached to a metal plate.
[FIG. 20] A cross-sectional view showing a state in which a sound insulation structure of Working Example 10 of the present invention is attached to a metal plate.
[FIG. 21A] A perspective view of a sound insulation structure of Working Example 11 of the present invention.
[FIG. 21B] A cross-sectional view showing a state in which the sound insulation structure shown in FIG. 21A is attached to a metal plate.
[FIG. 22] A side view of an automobile that is an example of a vehicle equipped with a soundproof structure of the present invention.
[FIG. 23] A side view of the soundproof structure shown in FIG. 22.
[FIG. 24] A perspective view of the soundproof structure shown in FIG. 22 as viewed from the front.
[FIG. 25] A cross-sectional view taken along line C-C of FIG. 24.

### Embodiments of the Invention

Embodiments of the present invention will next be described with reference to the drawings.

### [First Embodiment]

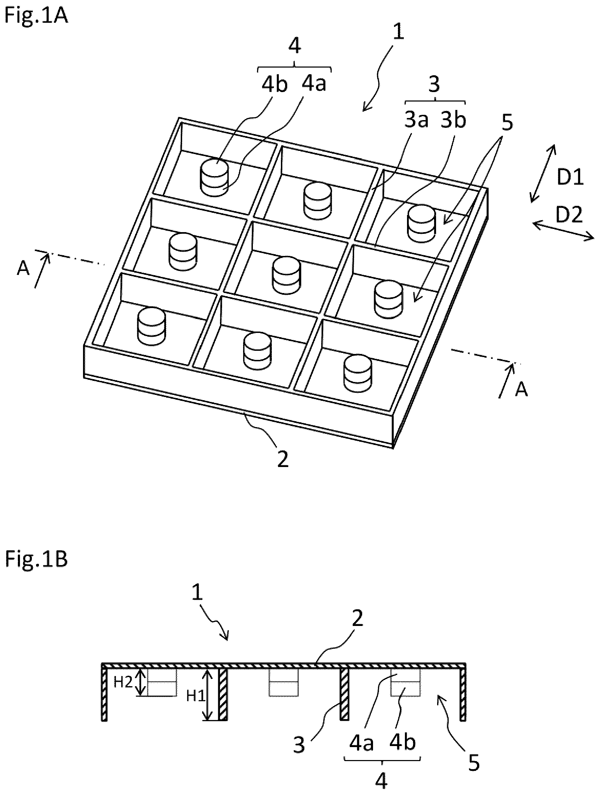

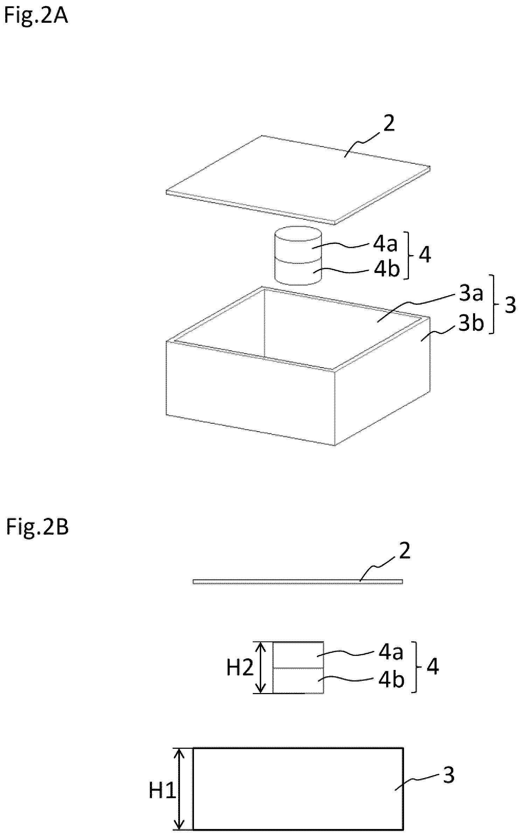

FIG. 1A is a perspective view of sound insulation structure 1 according to a first embodiment of the present invention. FIG. 1B is a cross-sectional view taken along line AA of FIG. 1A and turned upside down. Sound insulation structure 1 has elastic sheet-like membrane part 2, elastic support wall part 3 standing substantially perpendicularly from membrane part 2, and weight parts 4 standing substantially perpendicularly from membrane part 2. Membrane part 2 is divided into a plurality of compartments (unit structures) 5 by support wall parts 3. Weight parts 4 are located inside all of multiple compartments 5 or inside some of multiple compartments 5. In compartments 5 in which weight parts 4 are located, one weight part 4 is located in one compartment 5. FIG. 2A is an exploded perspective view of one compartment 5 of sound insulation structure 1. FIG. 2B is an exploded front view thereof. Height H1 of support wall part 3 extending from membrane part 2 in a direction perpendicular to membrane part 2 is greater than height H2 of weight part 4 extending from membrane part 2 in the direction perpendicular to membrane part 2. Each of weight parts 4 constitutes a spring-mass resonator having spring part 4a that has elasticity and mass part 4b that has greater mass than spring part 4a. The term "elasticity" used here refers to the property by which a solid substance that has been deformed by an external force returns to its original shape when the external force is removed and includes energy elasticity and rubber elasticity (entropy elasticity). Here, the term "having elasticity" means that the material has at least one of energy elasticity and rubber elasticity (entropy elasticity).

Support wall part 3 in this embodiment includes a plurality of first wall parts 3a extending in a first direction D1 parallel to membrane part 2, and a plurality of second wall parts 3b extending in a second direction D2 perpendicular to the first direction D1. Specifically, a plurality of first wall parts 3a are arranged in parallel, and a plurality of second wall parts 3b are arranged in parallel. First wall parts 3a and second wall parts 3b are joined at intersection points. In this manner, the plurality of first wall parts 3a and the plurality of second wall parts 3b form a lattice structure. A plurality of compartments 5, each having a square planar shape and partitioned by first wall parts 3a and second wall parts 3b, is arranged in a matrix. In other words, support wall part 3 has a structure in which a plurality of rectangular tubes, each having a square cross-sectional shape, is arranged to define each compartment 5. Support wall part 3 is preferably made of a flexible material such as rubber, elastomer, or resin foam. The flexible material referred to here is any one of a material that has rubber elasticity but no energy elasticity, a material that has energy elasticity but no rubber elasticity, and a material that has both rubber elasticity and energy elasticity.

In this embodiment, the portion of weight part 4 that is attached to membrane part 2 is spring part 4a. The portion opposite the side attached to membrane part 2 is mass part 4b having greater mass than spring part 4a. In the example shown in FIGS. 1A to 2B, spring part 4a and mass part 4b have the same shape and dimensions but are made of different materials. Spring part 4a is made of a flexible material. Mass part 4b is made of a material having a higher density than the material constituting spring part 4a. Spring part 4a functions as a spring, and mass part 4b functions as a mass, thus forming a spring mass resonator. In addition, membrane part 2 may also function together with spring part 4a of the weight part 4 as a part of the spring of the spring mass resonator. Furthermore, the air in the space surrounded by membrane part 2 and support wall part 3 may function as part of the spring of the spring mass resonator (air spring). Spring part 4a is also preferably made of a flexible material, i.e., a material that has no energy elasticity but has rubber elasticity, a material that has no rubber elasticity but has energy elasticity, or a material that has both rubber elasticity and energy elasticity.

According to sound insulation structure 1 of this embodiment, the vibration of membrane part 2 is controlled by the action of the spring-mass resonator constituted by spring parts 4a and mass parts 4b of weight parts 4. In particular, membrane vibration is significantly reduced in a specific frequency range (for example, frequencies below 1000 Hz, which is the main frequency band of road noise in automobiles). As a result, the sound radiated from membrane part 2 is reduced, and high sound insulation is achieved.

Sound insulation structure 1 of this embodiment preferably has 10 to 1000 compartments 5 per 1000 cm² of the area of membrane part 2, and more preferably has 50 to 500 compartments 5 per 1000 cm² of the area of membrane part 2. If there are too few compartments 5, the effect of dividing entire sound insulation structure 1 into multiple compartments 5 and achieving a sound-insulating effect for each compartment will be poor, and there is a risk that the sound-insulating properties of entire sound insulation structure 1 will be reduced. On the other hand, if there are too many compartments 5, the weight of entire sound insulation structure 1 may increase. The area of the planar shape of each of compartments 5 is preferably 100 mm² or more and 1000 mm² or less, and more preferably 200 mm² or more and 800 mm² or less. Making the area of the planar shape of each compartment 5 too small may complicate arrangement of weight part 4 within the compartment. On the other hand, making the area too large may degrade the effect of weight part 4 upon membrane part 2 and thus raise the possibility of reducing the sound insulation. The height of the entirety of sound insulation structure 1 in the direction perpendicular to membrane part 2 is preferably 5 mm or more and 20 mm or less. If the overall height of the sound insulation structure 1 is insufficient, weight part 4 may not have sufficient height to function as a spring mass resonator. On the other hand, making sound insulation structure too high will increase the overall weight of sound insulation structure 1. In addition, the drawings represent components such as compartments 5 and support wall part 3 schematically. Although the number and area of compartments 5 and the height of sound insulation structure 1 may not be illustrated strictly and accurately and may not be consistent across drawings, the number and area of compartments 5 and the height of sound insulation structure 1 are preferably designed appropriately to be within the numerical ranges stated above.

Membrane part 2, support wall part 3, and spring parts 4a of sound insulation structure 1 of this embodiment are all made of an elastic body having a dynamic storage modulus (E') of 0.01 MPa or more and 100 MPa or less at 23 degrees C and at a frequency of 1 Hz to 1000 Hz, and a loss tangent (tan δ) of 0.01 or more and 0.50 or less at 23 degrees C and at a frequency of 1 Hz to 1000 Hz, preferably a dynamic storage modulus (E') of 0.05 MPa or more and 50 MPa or less at 23 degrees C and a loss tangent (tan δ) of 0.05 or more and 0.50 or less at 23 degrees C and at a frequency of 1 Hz to 1000 Hz. The dynamic storage modulus (E') and loss tangent (tan δ) are determined by creating a master curve at 23 degrees C using a dynamic viscoelasticity tester. If the dynamic storage modulus (E') at 23 degrees C and at frequencies between 1 Hz and 1000 Hz is less than 0.01 MPa, the sound insulation properties in the target frequency band may deteriorate, and the shape retention of membrane part 2 and support wall part 3 may also deteriorate. If the dynamic storage modulus (E') at 23 degrees C in the frequency range of 1 Hz to 1000 Hz is greater than 100 MPa, vibrations may worsen in the sound insulation target frequency band and sound insulation structure 1 may become too rigid, complicating installation. Membrane part 2 and support wall part 3 may be made of the same material or of different materials. Membrane part 2 is also preferably made of a flexible material, i.e., a material that has rubber elasticity but no energy elasticity, a material that has energy elasticity but no rubber elasticity, or a material that has both rubber elasticity and energy elasticity.

Since weight parts 4 are attached to membrane part 2, membrane part 2 is preferably a relatively hard elastic membrane. The dynamic storage modulus (E') of membrane part 2 is preferably 15 MPa or more. The thickness (membrane thickness) is preferably 0.1 mm or more and 3.0 mm or less, and more preferably about 0.5 mm. If the thickness of membrane part 2 is less than 0.1 mm, vibration of membrane part 2 may deteriorate, and the sound insulation performance in the frequency band that is the target of sound insulation may deteriorate. If the thickness of membrane part 2 is greater than 3.0 mm, the thickness and overall weight of sound insulation structure 1 may increase. The material of membrane part 2 preferably has a durometer A hardness of 30 or more and more preferably 70 or more according to JIS K6253. If the durometer A hardness of membrane part 2 is less than 30, the vibration of membrane part 2 may deteriorate and the sound insulation performance in the sound insulation target frequency band may deteriorate. The rigidity (axial rigidity) k of membrane part 2 is expressed as k = E' x A/L using the dynamic storage modulus E', the cross-sectional area A of membrane part 2, and the thickness L of membrane part 2. When the area of membrane part 2 to be evaluated for rigidity is 1000 cm², the rigidity k is preferably 10⁶ N/mm or more and 10⁹ N/mm or less, and more preferably 3 x 10⁶ N/mm or more and 10⁸ N/mm or less. If the rigidity of membrane part 2 is less than 10⁶ N/mm when the area of membrane part 2 is 1000 cm², the vibration of membrane part 2 may deteriorate, and the sound insulation properties in the frequency band that is the target of insulation may also deteriorate. If the rigidity of membrane part 2 is greater than 10⁹ N/mm when the area of membrane part 2 is 1000 cm², sound insulation structure 1 may become too rigid and thus may be difficult to install. The bending rigidity K of membrane part 2 is expressed as K = E' x I, where E' is the dynamic storage elastic modulus and I is the second moment of area. The second moment of area I is calculated based on the thickness h of membrane part 2 and the width b of membrane part 2 as I = b x h 3 /12. When the area of membrane part 2 to be evaluated is 1000 cm², the bending rigidity K is preferably 30 N/mm² or more and 10⁵ N/mm² or less, and more preferably 50 N/mm² or more and 5 × 10⁴ N/mm² or less. If the bending rigidity K is less than 30 N/mm² when the area of membrane part 2 is 1000 cm², the vibration of membrane part 2 will deteriorate and the risk arises that the sound insulation properties for the frequency band that is target of sound insulation will deteriorate. If the bending rigidity K is greater than 10⁵ N/mm² when the area of membrane part 2 is 1000 cm², sound insulation structure 1 will become too rigid and thus be more difficult to install. The cross-sectional shape of membrane part 2 is not particularly limited and may be flat or may have projections and recesses.

Examples of materials for membrane part 2 include crosslinked (vulcanized) rubber, thermoplastic elastomer, and plastic. Examples of crosslinked (vulcanized) rubber include natural rubber (NR), isoprene rubber (IR), butadiene rubber (BR), styrene-butadiene rubber (SBR), chloroprene rubber (CR), butyl rubber (IIR), nitrile rubber (NBR), hydrogenated nitrile rubber (HNBR), ethylene-α-olefin-non-conjugated polyene copolymers such as ethylene-propylene rubber (EPM), ethylene-propylene-diene rubber (EPDM) and ethylene-butene-diene rubber (EBDM), chlorosulfonated polyethylene (CSM), chlorinated polyethylene (CM), acrylic rubber (ACM), ethylene-acrylic rubber (AEM), ethylene-vinyl acetate rubber (EVA), epichlorohydrin rubber (CO, ECO), polysulfide rubber (T), silicone rubber (Q) such as methylvinylsilicone rubber (VMQ) and fluorinated silicone rubber (FVMQ), urethane rubber (U), fluororubber (FKM), and other rubber materials that have been crosslinked (vulcanized). These crosslinked (vulcanized) rubbers can be used alone or in combinations of two or more kinds. Examples of the crosslinking (vulcanization) method include a method in which crosslinking (vulcanization) is performed by heating using an organic peroxide, a phenolic resin, an oxime compound, sulfur, a sulfur-based compound, or a polyamine compound as a crosslinking agent (vulcanizing agent), and a method in which crosslinking is performed by irradiating with an electron beam. The crosslinked (vulcanized) rubber may contain various known compounding agents generally used as rubber compounding agents (reinforcing agents such as carbon black and silica, fillers such as calcium carbonate, paraffin oil, softeners such as plasticizers, processing aids, antioxidants, light stabilizers, flame retardants, mildew inhibitors, acid acceptors, silane coupling agents, antistatic agents, ultraviolet absorbers, and so on). These crosslinked (vulcanized) rubbers, crosslinking agents (vulcanizing agents), and compounding agents may be made from biomass raw materials.

Examples of the thermoplastic elastomer include olefin-based thermoplastic elastomers, styrene-based thermoplastic elastomers, polyester-based thermoplastic elastomers, polyvinyl chloride-based thermoplastic elastomers, and ethylene-vinyl acetate-based thermoplastic elastomers. Examples of plastics include polyethylene, polypropylene, polystyrene, polyethylene terephthalate, polyvinyl chloride, and composite resins containing these materials. These thermoplastic elastomers and plastics may be derived from biomass feedstocks.

Specifically, the material of membrane part 2 is preferably ethylene-propylene-diene rubber, thermoplastic olefin-based elastomer, thermoplastic styrene-based elastomer, polyethylene, polypropylene, polyethylene terephthalate, thermoplastic polyurethane, or the like.

Support wall part 3 is preferably made of a flexible material that is soft enough to support membrane part 2. The plate thickness of support wall part 3 is preferably 0.5 mm or more and 5.0 mm or less, and more preferably 1.0 mm or more and 3.0 mm or less. If the plate thickness of support wall part 3 is less than 0.5 mm, there is a risk that the shape retention of the sound insulation structure 1 will deteriorate. If the plate thickness of support wall part 3 is greater than 5.0 mm, vibration of membrane part 2 may deteriorate, and this may result in deterioration in the sound insulation performance in the target frequency band for insulation and may further increase the overall weight of sound insulation structure 1. The height of support wall part 3 extending in the direction perpendicular to membrane part 2 is preferably 5 mm or more and 20 mm or less, and more preferably 10 mm or more and 20 mm or less. Support wall part 3 may have different heights in some portions. When the height of support wall part 3 varies partially, the higher part may be 10 mm or more and 20 mm or less, more preferably 12 mm or more and 20 mm or less, and even more preferably 14 mm or more and 20 mm or less. If the height of support wall part 3 is too low, there is a risk that weight parts 4 will not have a sufficient height to function as spring mass resonators. If the height of support wall part 3 is too great, there is a risk of an increase in the overall weight. The material of support wall part 3 preferably has a durometer A hardness according to JIS K6253 of 1 or more and 90 or less, and more preferably 10 or more and 70 or less. If the durometer A hardness of support wall part 3 is less than 1, the shape retention of sound insulation structure 1 may deteriorate. If the durometer A hardness of support wall part 3 is greater than 90, vibrations from support wall part 3 will be transmitted to membrane part 2, causing both deterioration of the sound insulation performance as well as excessive rigidity of sound insulation structure 1 that will interfere with easy installation. The rigidity k of support wall part 3 is expressed as k = E' x A/L, where E' is the dynamic storage elastic modulus, A is the cross-sectional area of support wall part 3, and L is the height of support wall part 3. When the area of support wall part 3 to be evaluated for rigidity is 1000 cm², the rigidity k is preferably 10 N/mm or more and 10⁶ N/mm or less, and more preferably 10² N/mm or more and 10⁵ N/mm or less. If the rigidity k of support wall part 3 is less than 10 N/mm when the area of the support wall part 3 is 1000 cm², the shape retention of sound insulation structure 1 may deteriorate. If the stiffness k is greater than 10⁶ N/mm when the area of support wall part 3 is 1000 cm², vibrations from support wall part 3 will be transmitted to membrane part 2, resulting in deterioration of sound insulation performance and an increase in the rigidity of sound insulation structure 1, which may interfere with installation.

Examples of materials for support wall part 3 include crosslinked (vulcanized) rubber, thermoplastic elastomer, and resin foam. The crosslinked (vulcanized) rubber and thermoplastic elastomer may be the same as the materials listed as the materials for membrane part 2. The resin foam may have either a closed cell structure or an open cell structure, and examples of the foam include polyurethane foam, polystyrene foam, polyethylene foam, and ethylene-vinyl acetate rubber (EVA) foam. Specifically, the material of support wall part 3 is preferably ethylene-propylene-diene rubber, urethane rubber, silicone rubber, thermoplastic olefin-based elastomer, thermoplastic styrene-based elastomer, thermoplastic polyurethane, polyurethane foam, or the like. These resin foams may be made from biomass raw materials.

The material of spring parts 4a of weight parts 4 is a flexible material such as crosslinked (vulcanized) rubber, thermoplastic elastomer, or resin foam. The crosslinked (vulcanized) rubber, thermoplastic elastomer, and resin foam may be the same as the materials listed as the materials for support wall part 3. Specifically, the material of spring parts 4a of weight parts 4 is preferably ethylene-propylene-diene rubber, urethane rubber, silicone rubber, thermoplastic olefin-based elastomer, thermoplastic styrene-based elastomer, thermoplastic polyurethane, polyurethane foam, or the like.

The material of mass part 4b is not particularly limited, but may be resin, metal, or the like. Mass part 4b has greater mass than spring part 4a, and has a mass of, for example, 0.1 g or more and 2.0 g or less. Mass part 4b preferably has a mass that is at least twice the mass of spring part 4a. If the weight of mass part 4b is less than twice the mass of spring part 4a, weight part 4 cannot resonate sufficiently in the frequency range that is the target of sound insulation, resulting in poor sound insulation. When the material of mass part 4b is a resin, the resin may be made of a biomass raw material.

The spring constant (rigidity) of spring part 4a is determined based on the mass of mass part 4b such that the resonant frequency coincides with the frequency that is the main target of sound insulation. As an example, when the mass of mass part 4b is 1.0 g and the main frequency that is the target of sound insulation is 1000 Hz or less, the spring constant of spring part 4a is 1 N/mm or more and 50 N/mm or less.

With this configuration, membrane part 2, support wall part 3, and weight part 4 are all relatively light in weight, and their dimensions in the direction perpendicular to membrane part 2 are relatively small. Thus, sound insulation structure 1 of this embodiment is lightweight and thin and yet provides high sound insulation in a specific frequency range (for example, 1000 Hz or less) as described above. Furthermore, support wall part 3 made of a flexible material can be easily and stably installed on a curved or uneven installation surface as well as on a flat installation surface without requiring securement thereto by adhesive or the like.

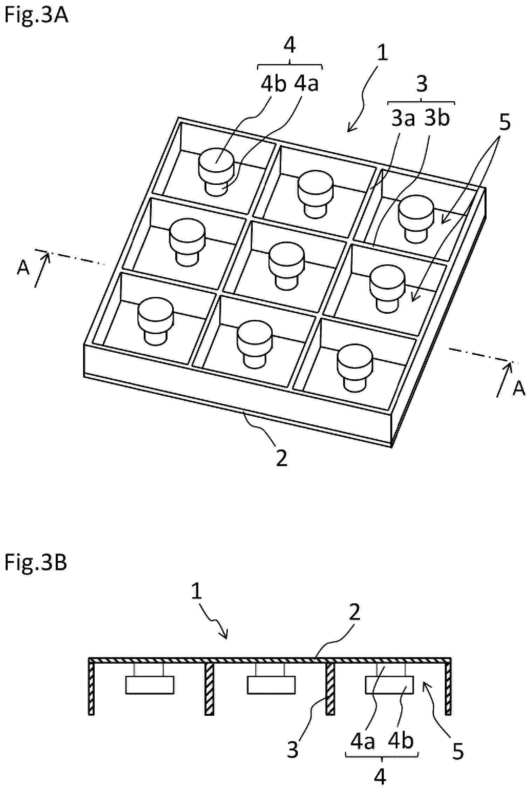

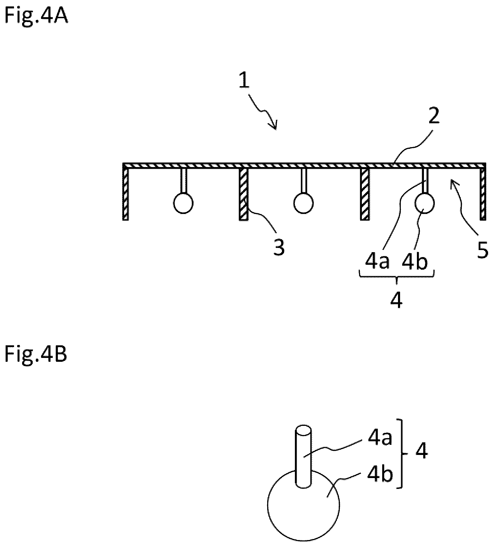

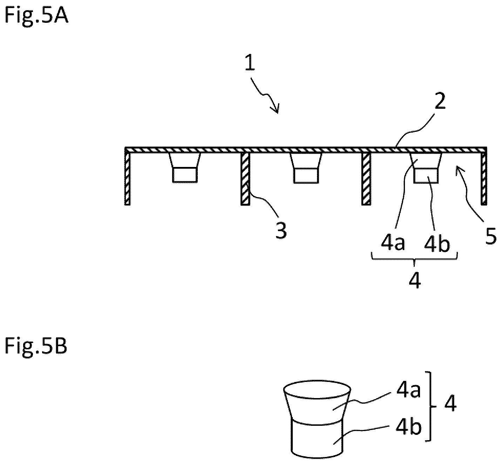

FIG. 3A is a perspective view of sound insulation structure 1 according to a modification of the first embodiment of the present invention. FIG. 3B is a cross-sectional view taken along line A-A of FIG. 3A and turned upside down. FIG. 4A is a cross-sectional view of sound insulation structure 1 according to another modification. FIG. 4B is a perspective view of weight part 4 of sound insulation structure 1. FIG. 5A is a cross-sectional view of sound insulation structure 1 according to still another modification. FIG. 5B is a perspective view of weight part 4 of sound insulation structure 1. In these modifications, spring part 4a and mass part 4b of weight part 4 have different shapes and dimensions. In the modification shown in FIGs. 3A and 3B, spring parts 4a are cylindrical with a small diameter, and mass parts 4b are cylindrical with a large diameter. In the modification shown in FIGS. 4A and 4B, spring parts 4a have an elongated cylindrical shape, and mass parts 4b have a spherical shape. The diameter of the cross-sectional shape of cylindrical spring parts 4a is smaller than the diameter of spherical mass part 4b. In the variant shown in Figures 5A and 5B, spring parts 4a are frustoconical and mass parts 4b are cylindrical. The diameter of the smallest portion of the frustoconical spring parts 4a is substantially equal to the diameter of cylindrical mass parts 4b. In the modifications shown in FIGs. 3A to 4B, mass parts 4b have a larger volume than spring parts 4a. Therefore, even if spring parts 4a and mass parts 4b are made of the same material, mass parts 4b have greater mass than spring parts 4a, and spring-mass resonators can be formed. However, in these modifications, spring parts 4a and mass parts 4b may be formed of different materials, and mass parts 4b may have greater mass than spring parts. On the other hand, in the modification shown in FIGs. 5A and 5B, spring parts 4a have greater volume than mass parts 4b. In this case, mass parts 4b are formed of a material having a higher density than spring parts 4a, and mass parts 4b have greater mass than spring parts, whereby spring-mass resonators are formed. When each spring part 4a is a truncated cone tapered in the direction away from membrane part 2 as in the modification shown in FIGs. 5A and 5B, membrane part 2 and spring part 4a are molded integrally with each other, and spring part 4a can be easily released from the mold.

In this embodiment, spring part 4a and mass part 4b of each weight part 4 are made different in either material or volume or both, thereby making the mass of mass part 4b greater than that of spring part 4a to form a spring mass resonator and to achieve sufficient sound insulation effect. That is, the materials, shapes, and dimensions of spring part 4a and mass part 4b are determined so as to form a spring-mass resonator that can provide a sufficient sound insulation effect. The materials, shapes, and dimensions of spring part 4a and mass part 4b can be freely selected as long as the mass of mass part 4b can be made greater than spring part 4a to an extent that allows realization of a spring-mass resonator that can provide a sufficient sound insulation effect. However, spring part 4a must be made of a flexible material in order for it to function as a spring.

### [Second Embodiment]

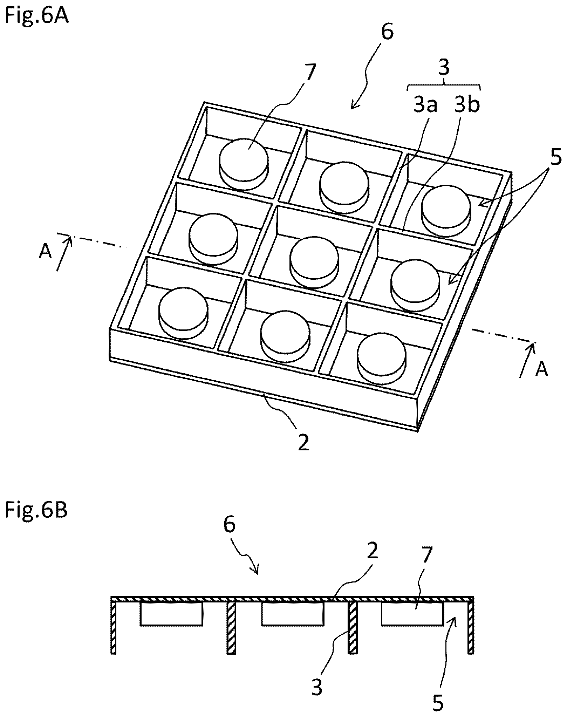

FIG. 6A is a perspective view of sound insulation structure 6 according to a second embodiment of the present invention. FIG. 6B is a cross-sectional view taken along line AA of FIG. 6A and turned upside down. Sound insulation structure 6 has weight part 7 of a single structure that is not divided into a spring part and a mass part. In this embodiment, a spring mass resonator is configured in which entire weight part 7 functions as the mass part and membrane part 2 functions as the spring part. As an example, the mass of weight part 7 ranges from about 0.1 g to 2.0 g. The material of weight part 7 is not limited and can be, for example, synthetic resin or metal. The rest of the configuration is similar to that of the first embodiment described above, and description thereof is therefore here omitted. In sound insulation structure 6 of this embodiment as well, membrane vibration is controlled by the action of the spring-mass resonator formed by weight part 7 and membrane part 2. Membrane vibration is significantly reduced and high sound insulation is provided in a specific frequency range (for example, below 1000 Hz). In addition, the air in the space surrounded by membrane part 2 and support wall part 3 may also function together with membrane part 2 as part of the spring of the spring mass resonator (air spring).

In the present embodiment, the dynamic storage modulus (E') of both membrane part 2 and support wall part 3 is preferably 0.01 MPa or more and 100 MPa or less at 23 degrees C and at a frequency of 1 Hz to 1000 Hz , and the loss tangent (tan δ) at 23 degrees C and at a frequency of 1 Hz to 1000 Hz is preferably 0.01 or more and 0.50 or less. Furthermore, the dynamic storage modulus (E') of both membrane part 2 and support wall part 3 in this embodiment is more preferably 0.05 MPa or more and 50 MPa or less at a frequency of 1 Hz to 1000 Hz and at 23 degrees C, and the loss tangent (tan δ) of both membrane part 2 and support wall part 3 is more preferably 0.05 or more and 0.50 or less at a frequency of 1 Hz to 1000 Hz and at 23 degrees C.

In addition, support wall part 3 in this embodiment is made of any one of a material that has rubber elasticity but that has no energy elasticity, a material that has energy elasticity but that has no rubber elasticity, and a material that has both rubber elasticity and energy elasticity. Similarly, membrane part 2 of this embodiment is made of either a material that has rubber elasticity but that has no energy elasticity, a material that has energy elasticity but that has no rubber elasticity, or a material that has both rubber elasticity and energy elasticity.

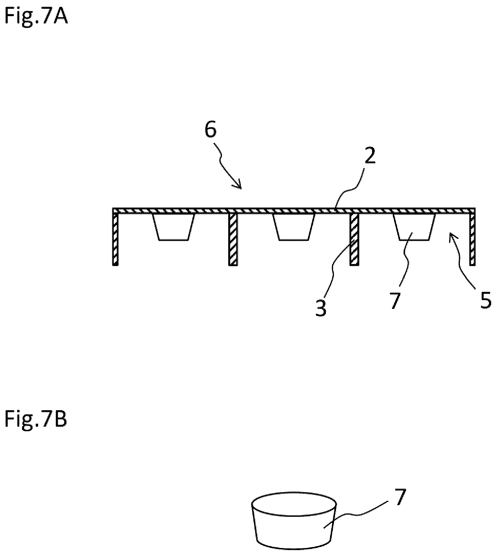

FIG. 7A is a cross-sectional view of sound insulation structure 6 according to a modification of the second embodiment of the present invention. FIG. 7B is a perspective view of weight part 7 of sound insulation structure 6. In this modification, weight part 7 has a truncated cone shape tapering in a direction away from membrane part 2. When membrane part 2 and weight part 7 are integrally molded in this configuration, releasability from the mold is good. The shape of weight part 7 in this embodiment is not particularly limited and can be freely determined.

In either the first or second embodiment, membrane part 2 and support wall part 3 can be formed using the aforementioned materials by integral molding or two-color molding, such as injection molding, compression molding, press molding, extrusion molding, transfer molding, and casting. Furthermore, weight parts 4 and 7 together with membrane part 2 and support wall part 3 may also be formed using the above-mentioned materials by integral molding, two-color molding, insert molding, or the like. However, sound insulation structures 1 and 6 may be assembled by forming membrane part 2, support wall part 3, and weight parts 4 and 7 separately and then joining them together by adhesion or thermal fusion.

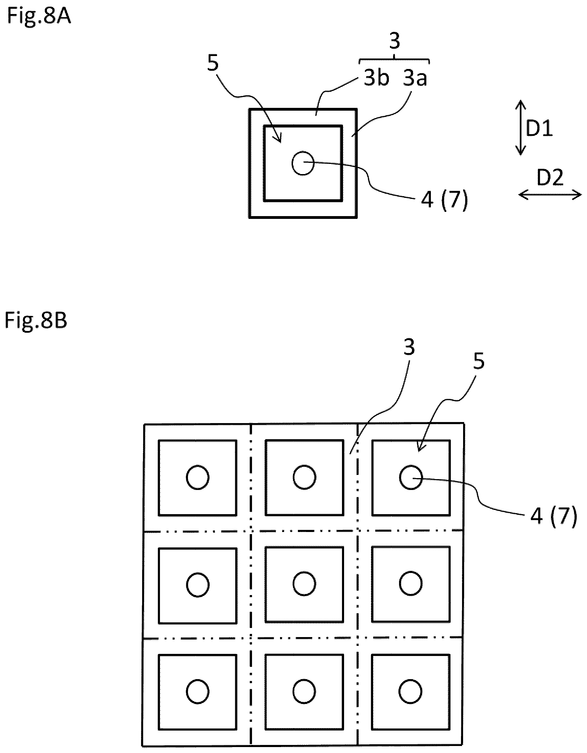

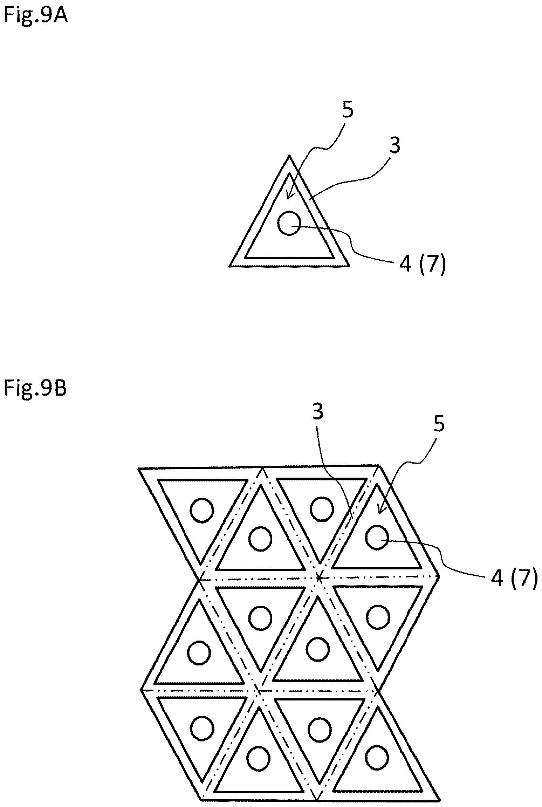

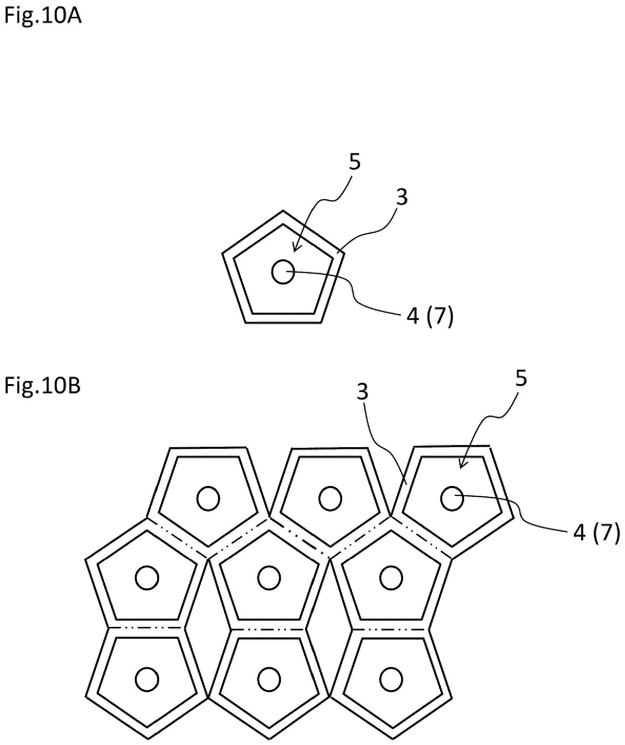

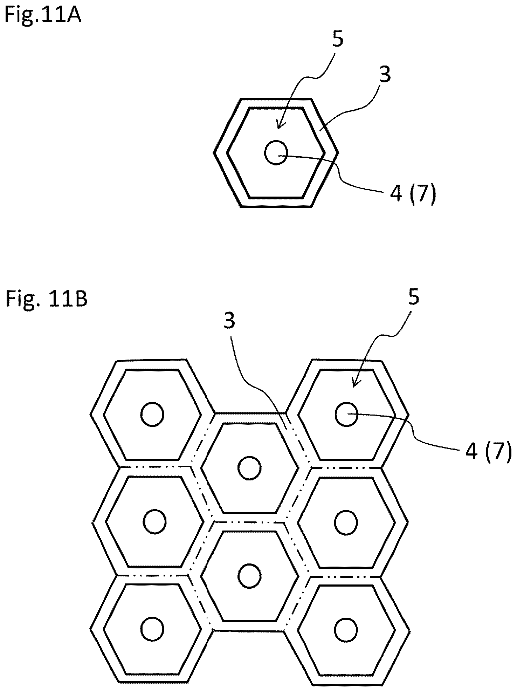

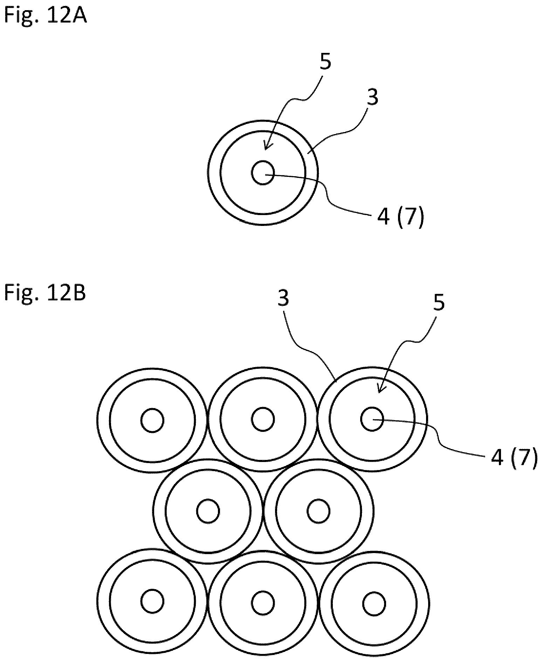

As shown in FIGs. 8A and 8B, in the configuration of sound insulation structures 1 and 6 described above, support wall part 3 includes a plurality of first wall parts 3a extending in a first direction D1 parallel to membrane part 2 and a plurality of second wall parts 3b extending in a second direction D2 perpendicular to first direction D1, and the planar shape of each compartment 5 is a square. In other words, support wall part 3 is a square cylindrical shape having a square cross-sectional shape that defines each of compartments 5, a large number of square cylindrical support wall parts 3 being arranged side by side with support wall parts 3 of adjacent compartments 5 integrated together. However, the present invention is not limited to this configuration. For example, as shown in FIGs. 9A and 9B, the planar shape of each compartment 5 may be triangular, and support wall parts 3 may be a triangular cylinder having triangular cross-sectional shapes that define each of compartments 5. As shown in FIGs. 10A and 10B, the planar shape of each compartment 5 may be a pentagon, and support wall part 3 may be a pentagonal cylinder having pentagonal cross-sectional shapes that define each of compartments 5. As shown in FIGs. 11A and 11B, the planar shape of each of compartments 5 may be hexagonal, and the support wall part 3 may be a hexagonal cylinder having hexagonal cross-sectional shapes that define each of compartments 5 to thus form a so-called honeycomb structure. Furthermore, as shown in FIGs. 12A and 12B, the planar shape of each of compartments 5 may be circular, and the support wall part 3 may be circular cylinder having circular cross-sectional shapes that define each of compartments 5. In the configurations shown in FIGs. 10A, 10B, 12A, and 12B, gaps are generated between compartments 5, and the shapes and dimensions of support wall parts 3 are therefore preferably determined so as to reduce gaps. In the configurations shown in Figures 8A, 8B, 9A, 9B, 11A, and 11B, no gaps are formed between compartments 5. Furthermore, each compartment 5 may have various shapes not shown, such as a rectangle, a parallelogram, a trapezoid, a polygon with seven or more sides, an ellipse, an oval, or may have an irregular shape. Support wall part 3 is formed to have a shape and dimensions that match the planar shape of each of compartments 5.

Sound insulation structures 1 and 6 of the present invention are extremely thin and lightweight and can be easily mounted on curved or uneven surfaces, and therefore may be mounted for use on panels of vehicles, particularly automobiles. Panels of automobiles and the like are basically non-permeable plates, examples of which include metal plates (iron plates, steel plates, aluminum plates) and resin plates. When the panel on which sound insulation structure 1 is mounted is a metal plate, the thickness of the metal plate is preferably in the range of 0.5 mm to 2.0 mm. In the case of a resin plate, the thickness is preferably in the range of 0.5 mm to 20 mm. When mounting sound insulation structures 1 and 6 on a panel of an automobile, the end surface of support wall part 3 of sound insulation structures 1 and 6 that is disposed opposite the side on which membrane part 2 is attached is preferably mounted on the panel. In this case, support wall part 3 may or may not be bonded to the panel, but support wall part 3 is preferably used by being mounted on the panel without being bonded to the panel.

Moreover, sound insulation structures 1 and 6 of the present invention may be used alone or in combination with other members (not shown). When sound insulation structures 1 and 6 of the present invention are used in combination with other members, they may be laminated or joined to the other members. When laminated or joined to other components, sound insulation structures 1 and 6 may be mounted so that they are in contact with the area on which they are mounted (e.g., an automobile panel) or they may be placed so that the other components are in contact with that area. Other components used in combination with sound insulation structures 1 and 6 may be made of a variety of materials.

Examples of locations in an automobile where sound insulation structures 1 and 6 of the present invention are installed include engine compartment locations such as an engine head cover, an engine body cover, a hood insulator, an insulator in front of dash, a partition wall of an airbox wall, an air cleaner of an air intake, a dust side-duct, and an undercover; interior locations such as a dash insulator (a dash silencer), a dash panel, a floor carpet (a floor silencer), a spacer, a door trim of a door, a location inside the door trim, an instrument panel, an instrument center box, an instrument upper box, an air conditioner casing, a roof trim, a location inside the roof trim, a sun visor, an air conditioning duct for a rear seat, a cooling duct for a battery cooling system in a battery-equipped vehicle, a cooling fan, a center console trim, a location inside a console, a parcel trim, a parcel panel, a seat headrest, a seat back of a front seat, a seat back of a rear seat, and the like; and locations in a trunk such as trunk side trim, inside the trim, and a drafter cover. In addition, sound insulation structures 1, 6 of the present invention can be installed within a frame of an automobile or between panels, and can also be installed in under-covers located under the floor on the automobile exterior, a fender protector, a back door, a wheel cover, an aerodynamic cover for a suspension, and the like.

Specific working examples and comparative examples of the sound insulation structure of the present invention will next be described.

### [Working Example 1]

Sound insulation structure 1 according to Working Example 1 of the present invention has the same structure as the first embodiment shown in FIGs. 1A to 2B. Membrane part 2 was made of an elastic body having a dynamic storage modulus (E') of 0.01 MPa or more and 100 MPa or less at 23 degrees C and at a frequency of 1 Hz to 1000 Hz, and a loss tangent (tan δ) of 0.01 or more and 0.50 or less at 23 degrees C and at a frequency of 1 Hz to 1000 Hz. More specifically, membrane part 2 of this working example had a dynamic storage modulus (E') of 20.4 MPa and a loss tangent (tan δ) of 0.12 at 23 degrees C and at a frequency of 1 Hz. The dynamic storage modulus (E') was 23.0 MPa and the loss tangent (tan δ) was 0.13 at 23 degrees C and at a frequency of 10 Hz. The dynamic storage modulus (E') was 25.4 MPa and the loss tangent (tan δ) was 0.16 at 23 degrees C and at a frequency of 100 Hz. The dynamic storage modulus (E') was 28.8 MPa and the loss tangent (tan δ) was 0.14 at 23 degrees C and at a frequency of 1000 Hz. Membrane part 2 was made of EPDM (ethylene-propylene-diene rubber) having a durometer A hardness of 70 according to JIS K6253 and a membrane thickness of 0.5 mm. When the planar shape of this membrane part 2 was a square with an area of 1000 cm², the bending rigidity K was 67.2 N/mm². When the planar shape was a square with an area of 400 cm², the bending stiffness K was 42.5 N/mm². Even if the membrane part were formed from the same material as membrane part 2, had a membrane thickness of 3 mm, and had a planar shape that is a square with an area of 1000 cm², its bending rigidity K would be approximately 1.5 x 10⁴ N/mm².

Support wall part 3 of this working example was made of an elastic body having a dynamic storage modulus (E') of 0.01 MPa or more and 100 MPa or less at 23 degrees C and at a frequency of 1 Hz to 1000 Hz, and a loss tangent (tan δ) of 0.01 or more and 0.50 or less at 23 degrees C and at a frequency of 1 Hz to 1000 Hz. More specifically, support wall part 3 of this working example had a dynamic storage modulus (E') of 13.2 MPa and a loss tangent (tan δ) of 0.12 at 23 degrees C and at a frequency of 1 Hz. The dynamic storage modulus (E') was 15.0 MPa and the loss tangent (tan δ) was 0.14 at 23 degrees C and at a frequency of 10 Hz. The dynamic storage modulus (E') was 17.4 MPa and the loss tangent (tan δ) was 0.17 at 23 degrees C and at a frequency of 100 Hz. The dynamic storage modulus (E') was 20.2 MPa, and the loss tangent (tan δ) was 0.16 at 23 degrees C and at a frequency of 1000 Hz. Support wall part 3 was made of EPDM having a durometer A hardness of 65 according to JIS K6253, a plate thickness of 1.6 mm, and a height of 10 mm in the direction perpendicular to membrane part 2. However, only outermost support wall part 3 had a plate thickness of 0.8 mm, which was half the thickness of other support wall part 3. Compartment 5 defined by multiple support walls 3 (first wall parts 3a and second wall parts 3b) had a square shape of 25 mm x 25 mm. There were 49 compartments 5 in a 200 mm × 200 mm square area (evaluation surface) of membrane part 2. However, only a part of this region is schematically shown in the drawing. Weight parts 4 were circular cylindrical with a diameter of 6 mm and a height of 6 mm (in the direction perpendicular to membrane part 2).

Of each weight part 4, spring part 4a that was the portion attached to membrane part 2 was 3 mm in height and was made of an elastic body having a dynamic storage modulus (E') of 0.01 MPa or more and 100 MPa or less at 23 degrees C and at a frequency of 1 Hz to 1000 Hz, and a loss tangent (tan δ) of 0.01 or more and 0.50 or less at 23 degrees C and at a frequency of 1 Hz to 1000 Hz. More specifically, spring part 4a of this working example had a dynamic storage modulus (E') of 0.60 MPa and a loss tangent (tan δ) of 0.17 at 23 degrees C and at a frequency of 1 Hz. The dynamic storage modulus (E') was 0.74 MPa and the loss tangent (tan δ) was 0.24 at 23 degrees C and at a frequency of 10 Hz. The dynamic storage modulus (E') was 0.97 MPa and the loss tangent (tan δ) was 0.17 at 23 degrees C and at a frequency of 100 Hz. The dynamic storage modulus (E') was 1.31 MPa and the loss tangent (tan δ) was 0.16 at 23 degrees C and at a frequency of 1000 Hz. Spring parts 4a were made of silicone rubber having a durometer A hardness of 10 according to JIS K6253. Mass parts 4b, which were the portion of weight parts 4 opposite the side attached to membrane part 2, also had a height of 3 mm and were made of rigid stainless steel (SUS304). The mass of each weight part 4 was approximately 0.8 g, and each weight part 4 had a resonance showing a peak at a frequency of 600 Hz to 650 Hz in the direction perpendicular to the surface on which each weight 4 was placed. The overall height of sound insulation structure 1 was 10.5 mm. The total surface density of one compartment 5 including membrane part 2, support wall part 3 and weight part 4 was 2.97 kg/m².

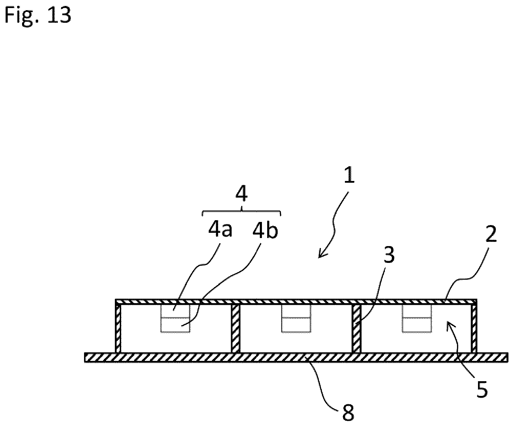

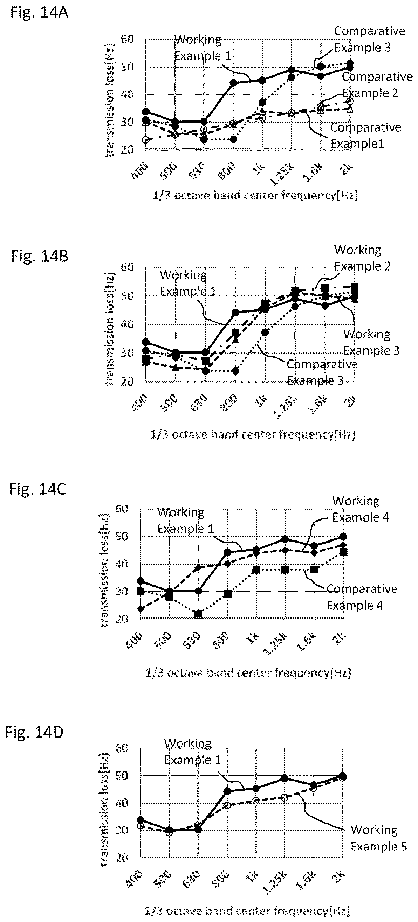

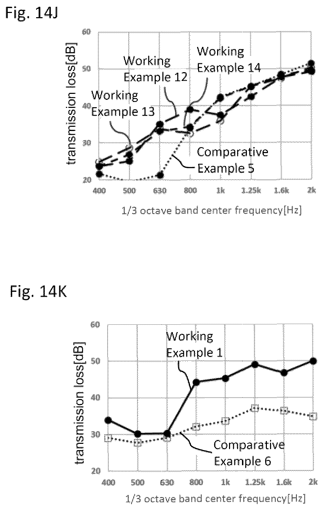

As shown in FIG. 13, the end surface of support wall part 3 of sound insulation structure 1 opposite the side attached to membrane part 2 was placed on iron plate 8 having a thickness of 0.8 mm. The surface of iron plate 8 opposite the side on which sound insulation structure 1 was placed was taken as the incident sound side, and the sound insulation property was then measured. Specifically, in accordance with the intensity method specified in JIS A1441-1, a test equipment room was used for which the sound source room was a reverberation room and the sound-receiving room was a semi-anechoic room, and the sound transmission loss (transmission loss) [dB] for the 1/3 octave band center frequency [Hz] was obtained by 1/3 octave band analysis. The relationship between the 1/3 octave band center frequency and the sound transmission loss was determined as shown in FIGs. 14A to 14F and 14K. Greater sound transmission loss indicated greater sound insulation. In the 1/3 octave band center frequencies [Hz] shown in Figures 14A to 14K, 1 kHz was 1000 Hz (the prefix "k" means "1000").

### [Comparative Example 1]

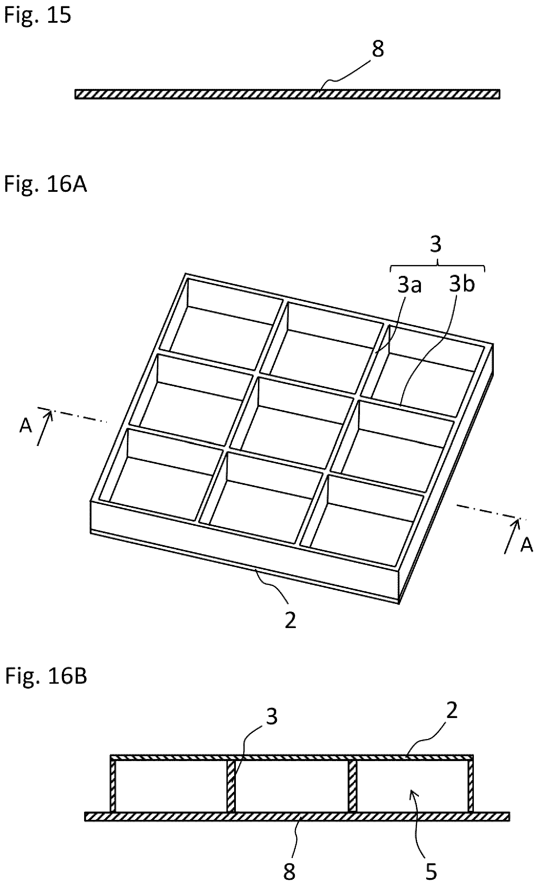

In Comparative Example 1, as shown in FIG. 15, the sound insulation was measured in a state in which nothing was placed on 0.8 mm-thick iron plate 8, and the relationship between the 1/3 octave band center frequency and the sound transmission loss is shown in FIG. 14A. This shows a state in which no sound insulation structure is provided. The area density of this construction was 6.02 kg/m².

### [Comparative Example 2]

In Comparative Example 2, a theoretical value was obtained of sound insulation calculated based on the mass law when a member having the same mass as that of sound insulation structure 1 of Working Example 1 was placed on 0.8 mm-thick iron plate 8, and the relationship between the 1/3 octave band center frequency and the sound transmission loss is shown in FIG. 14A. The area density of this construction was 8.99 kg/m².

### [Comparative Example 3]

In Comparative Example 3, as shown in FIGs. 16A and 16B, a sound insulation structure consisting only of membrane part 2 and support wall part 3 was mounted on 0.8 mm-thick iron plate 8, and the sound insulation was measured. The relationship between the 1/3 octave band center frequency and the sound transmission loss is shown in Figures 14A to 14B. Membrane part 2 and support wall part 3 of this example were the same as membrane part 2 and support wall part 3 of Working Example 1, but weight part 4 was not present. The area density of this construction was 2.43 kg/m².

### [Working Example 2]

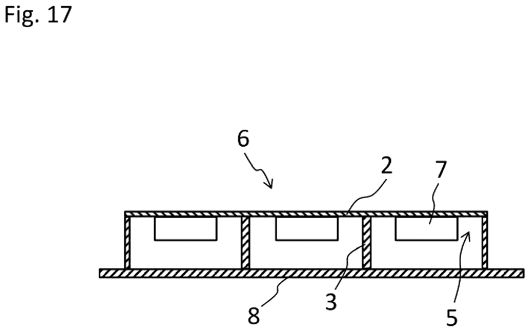

Sound insulation structure 6 according to Working Example 2 of the present invention had the same structure as the second embodiment shown in FIGs. 6A and 6B. Membrane part 2 and support wall part 3 of this working example were the same as membrane part 2 and support wall part 3 of Working Example 1. Weight parts 7 were made of EPDM having a durometer A hardness of 65 according to JIS K6253-3 and were circular cylindrical with a diameter of 13 mm and a height (dimension in the direction perpendicular to the membrane part 2) of 5 mm. The mass of each weight part 7 was approximately 0.85 g. The area density of this construction was 3.04 kg/m². As shown in FIG. 17, the end surface of support wall part 3 of sound insulation structure 6 opposite the side attached to membrane part 2 was placed on a 0.8 mm-thick iron plate 8 to measure the sound insulation, which is shown in FIG. 14B.

### [Working Example 3]

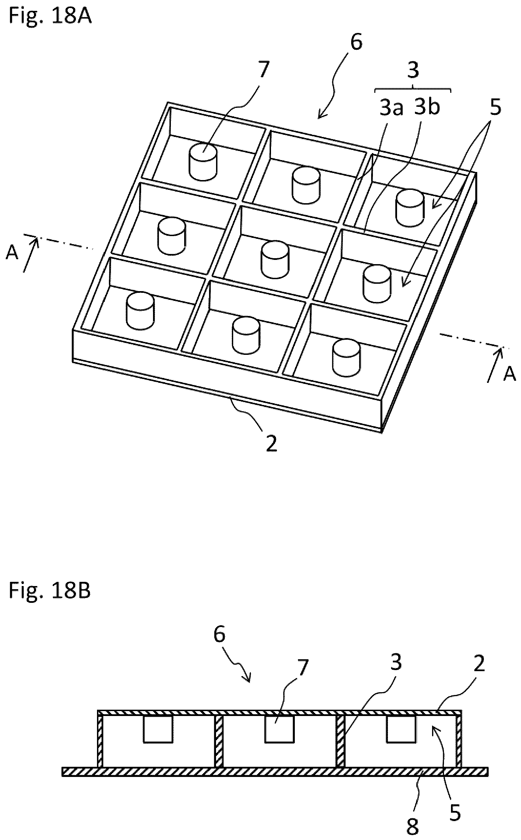

Sound insulation structure 6 according to Working Example 3 of the present invention shown in FIGs. 18A and 18B had the same structure as that of Working Example 2, but had weight parts 7 that were smaller than weight parts 7 of Working Example 2. Membrane part 2 and support wall part 3 of this working example were the same as membrane part 2 and support wall part 3 of Working Example 1. Weight parts 7 were made of EPDM having a durometer A hardness of 65 according to JIS K6253-3 and were circular cylindrical with a diameter of 6 mm and a height (dimension in the direction perpendicular to membrane part 2) of 5 mm. The mass of each weight part 7 was approximately 0.15 g. The area density of this construction was 2.54 kg/m². As shown in FIG. 18B, the end surface of support wall part 3 of sound insulation structure 6 opposite the side attached to membrane part 2 was mounted on 0.8 mm-thick iron plate 8 to measure the sound insulation, which is shown in FIG. 14B.

### [Working Example 4]

Sound insulation structure 1 (not shown) according to Working Example 4 of the present invention had the same structure as Working Example 1, but had support wall part 3 that was softer than support wall part 3 of Working Example 1. Membrane part 2 and weight parts 4 of the present working example were the same as membrane part 2 and weight parts 4 of Working Example 1. Support wall part 3 of this working example was made of an elastic body having a dynamic storage modulus (E') of 0.01 MPa or more and 100 MPa or less at 23 degrees C and at a frequency of 1 Hz to 1000 Hz, and a loss tangent (tan δ) of 0.01 or more and 0.50 or less at 23 degrees C and at a frequency of 1 Hz to 1000 Hz. More specifically, support wall part 3 of this working example had a dynamic storage modulus (E') of 1.48 MPa and a loss tangent (tan δ) of 0.07 at 23 degrees C and at a frequency of 1 Hz. The dynamic storage modulus (E') was 1.72 MPa and the loss tangent (tan δ) was 0.12 at 23 degrees C and at a frequency of 10 Hz. The dynamic storage modulus (E') was 2.00 MPa and the loss tangent (tan δ) was 0.11 at 23 degrees C and at a frequency of 100 Hz. The dynamic storage modulus (E') was 2.33 MPa and the loss tangent (tan δ) was 0.12 at 23 degrees C and at a frequency of 1000 Hz. Support wall part 3 was made of EPDM having a durometer A hardness of 30 according to JIS K6253-3, a plate thickness of 1.6 mm, and a height in the direction perpendicular to membrane part 2 of 10 mm. However, only outermost support wall part 3 had a plate thickness of 0.8 mm, which is half the thickness of other support wall part 3. The area density of this construction was 2.52 kg/m². The end surface of support wall part 3 of sound insulation structure 1 opposite the side attached to membrane part 2 was mounted on 0.8 mm-thick iron plate 8 to measure the sound insulation property, which is shown in FIG. 14C.

### [Comparative Example 4]

The sound insulation structure of Comparative Example 4 (not shown) had substantially the same structure as that of Working Example 1 but had support wall part 3 that was harder and less flexible than support wall part 3 of Working Example 1. Membrane part 2 and weight parts 4 of this comparative example were the same as membrane part 2 and weight parts 4 of Working Example 1. Support wall part 3 of this comparative example had a dynamic storage modulus (E') of 2.03 GPa and a loss tangent (tan δ) of 0.0045 at 23 degrees C and at a frequency of 1 Hz. The dynamic storage modulus (E') was 2.04 GPa and the loss tangent (tan δ) was 0.000060 at 23 degrees C and at a frequency of 10 Hz. The dynamic storage modulus (E') was 2.05 GPa and the loss tangent (tan δ) was 0.045 at 23 degrees C and at a frequency of 100 Hz. The dynamic storage modulus (E') was 2.07 and the loss tangent (tan δ) was 0.0079 GPa at 23 degrees C and at a frequency of 1000 Hz. Support wall part 3 was made of polylactic acid (PLA resin). The shape and the dimension of support wall part 3 of this comparative example were the same as those of support wall part 3 of Working Example 1. The area density of this construction was 2.63 kg/m². The end surface of support wall part 3 of sound insulation structure 1 opposite the side attached to membrane part 2 was mounted on 0.8 mm-thick iron plate 8 to measure the sound insulation property, which is shown in FIG. 14C.

### [Working Example 5]

Sound insulation structure 1 (not shown) of Working Example 5 had the same structure as that of Working Example 1 but had membrane part 2 that is softer than membrane part 2 of Working Example 1. Support wall part 3 and weight parts 4 of this working example were the same as support wall part 3 and weight parts 4 of Working Example 1. Membrane part 2 of this working example was made of EPDM having a durometer A hardness of 30 according to JIS K6253-3, which is the same as the material of support wall part 3 of Working Example 4, and its shape and dimensions were the same as those of membrane part 2 of Working Example 1. The area density of this construction was 2.83 kg/m². The end surface of support wall part 3 of sound insulation structure 1 opposite the side attached to membrane part 2 was mounted on 0.8 mm-thick iron plate 8 to measure the sound insulation performance, which is shown in FIG. 14D.

### [Working Example 6]

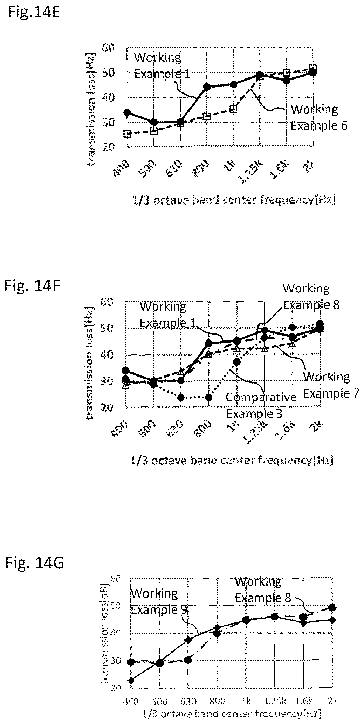

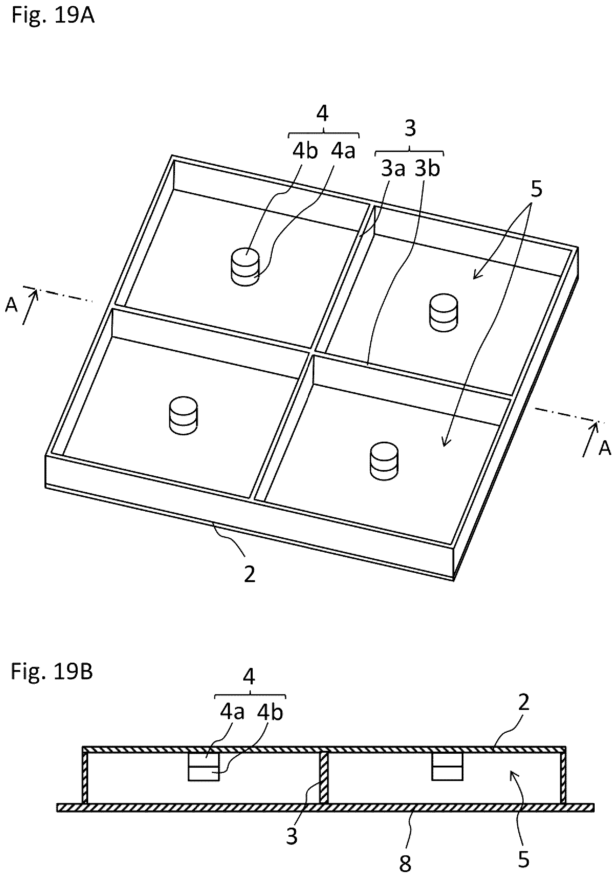

Sound insulation structure 1 of Working Example 6 shown in FIGs. 19A and 19B had the same structure as Working Example 1 but had compartments 5 that were larger than compartments 5 of Working Example 1. Membrane part 2 and weight parts 4 of the present working example were the same as membrane part 2 and weight parts 4 of Working Example 1. Support wall part 3 of this working example was the same as support wall part 3 of Working Example 1 but was arranged at wider intervals than in Working Example 1. As a result, in this working example, each compartment was a square of 50 mm x 50 mm, and its area was 2500 mm². The area density of this construction was 1.60 kg/m². There were nine compartments 5 in a 200 mm × 200 mm square area (evaluation surface) of membrane part 2. However, only a portion of this region is schematically shown in the drawing. As shown in FIG. 19B, the end surface of support wall part 3 of the sound insulation structure 1 opposite the side attached to membrane part 2 was mounted on 0.8 mm-thick iron plate 8 to measure the sound insulation, which is shown in Figure 14E.

### [Working Example 7]

Sound insulation structure 1 (not shown) of Working Example 7 had the same structure as Working Example 1, but weight parts 4 were circular cylindrical with a diameter of 13 mm and a height (dimension in the direction perpendicular to membrane part 2) of 9 mm. Of these weight parts 4, spring parts 4a that are the portion attached to membrane part 2 had a height of 4 mm and were made of an elastic body having a dynamic storage modulus (E') of 0.01 MPa or more and 100 MPa or less at 23 degrees C and at a frequency of 1 Hz to 1000 Hz and a loss tangent (tan δ) of 0.01 or more and 0.50 or less at 23 degrees C and at a frequency of 1 Hz to 1000 Hz. More specifically, spring parts 4a of this working example had a dynamic storage modulus (E') of 0.06 MPa and a loss tangent (tan δ) of 0.15 at 23 degrees C and at a frequency of 1 Hz. The dynamic storage modulus (E') was 0.07 MPa and the loss tangent (tan δ) was 0.15 at 23 degrees C and at a frequency of 10 Hz. The dynamic storage modulus (E') was 0.08 MPa and the loss tangent (tan δ) was 0.15 at 23 degrees C and at a frequency of 100 Hz. The dynamic storage modulus (E') was 0.10 MPa and the loss tangent (tan δ) was 0.15 at 23 degrees C and at a frequency of 1000 Hz. Spring parts 4a were made of a polyurethane foam. Mass parts 4b that are the portion of weight parts 4 opposite the side attached to membrane part 2 had a height of 5 mm and were made of EPDM having a durometer A hardness of 65 according to JIS K6253-3. The mass of each weight part 4 was approximately 1.0 g.

Membrane part 2 and support wall part 3 of this working example were the same as membrane part 2 and support wall part 3 of Working Example 1. The area density of this construction was 3.08 kg/m². The end surface of support wall part 3 of sound insulation structure 1 opposite the side attached to membrane part 2 was mounted on 0.8 mm-thick iron plate 8 to measure the sound insulation performance, which is shown in FIG. 14F.

### [Working Example 8]

Sound insulation structure 1 (not shown) of Working Example 8 had the same structure as the modification of the first embodiment shown in FIGs. 3A and 3B. Membrane part 2 and support wall part 3 of this working example were the same as membrane part 2 and support wall part 3 of Working Example 1, but weight parts 4 of this working example consisted of small-diameter circular cylindrical spring parts 4a and large-diameter circular cylindrical mass parts 4b. Spring parts 4a that are the portion of weight parts 4 that are attached to membrane part 2 were circular cylindrical with a diameter of 6 mm and a height (dimension in the direction perpendicular to the membrane part 2) of 3 mm and were made of the same material as spring parts 4a of weight parts 4 in Working Example 1 (silicone rubber with a durometer A hardness of 10 according to JIS K6253-3). Mass parts 4b that are the portion of weight parts 4 opposite the side attached to membrane part 2 were circular cylindrical with a diameter of 13 mm and a height of 5 mm and were made of EPDM having a durometer A hardness of 65 according to JIS K6253-3. The mass of each weight part 4 was approximately 1.0 g. The area density of this construction was 3.13 kg/m². The end surface of support wall part 3 of sound insulation structure 1 opposite to the side attached to membrane part 2 was mounted on 0.8 mm-thick iron plate 8 to measure the sound insulation properties, which are shown in FIGs. 14F to 14G.

### [Working Example 9]

Sound insulation structure 1 (not shown) of Working Example 9 had the same structure as the modification of the first embodiment shown in FIGs. 3A and 3B. Membrane part 2 and weight parts 4 in this working example were the same as membrane part 2 and weight parts 4 in Working Example 8, but support wall part 3 in this working example was made of EPDM having a durometer A hardness of 30 according to JIS K6253, a plate thickness of 1.6 mm, and a height of 10 mm in the direction perpendicular to membrane part 2. The area density of this construction was 2.81 kg/m². The end surface of support wall part 3 of sound insulation structure 1 opposite the side attached to membrane part 2 was mounted on 0.8 mm-thick iron plate 8 to measure the sound insulation properties, which are shown in FIGs. 14G to 14I.

### [Working Example 10]

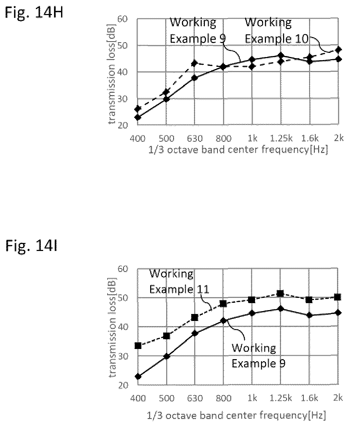

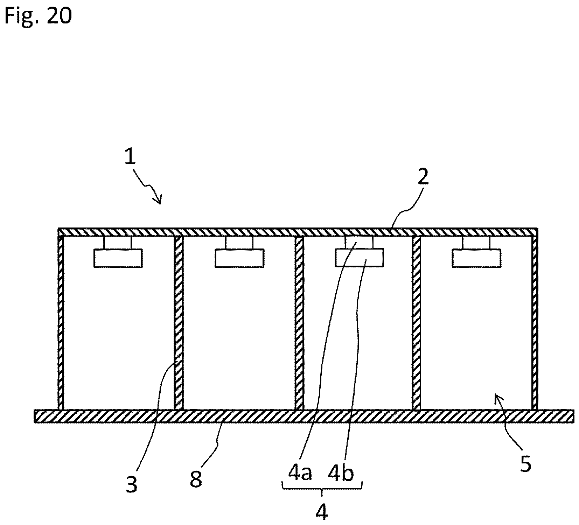

Sound insulation structure 1 of Working Example 10 shown in FIG. 20 had the same structure as the modification of the first embodiment shown in FIGs. 3A and 3B. Membrane part 2 and weight parts 4 in this working example were the same as membrane part 2 and weight parts 4 in Working Example 9, but support wall part 3 in this working example was made of EPDM having a durometer A hardness of 30 according to JIS K6253, a plate thickness of 1.6 mm, and a height of 14 mm in the direction perpendicular to membrane part 2. The area density of this construction is 3.16 kg/m². The end surface of support wall part 3 of sound insulation structure 1 opposite the side attached to membrane part 2 was mounted on 0.8 mm-thick iron plate 8 to measure the sound insulation, which is shown in FIG. 14H.

### [Working Example 11]

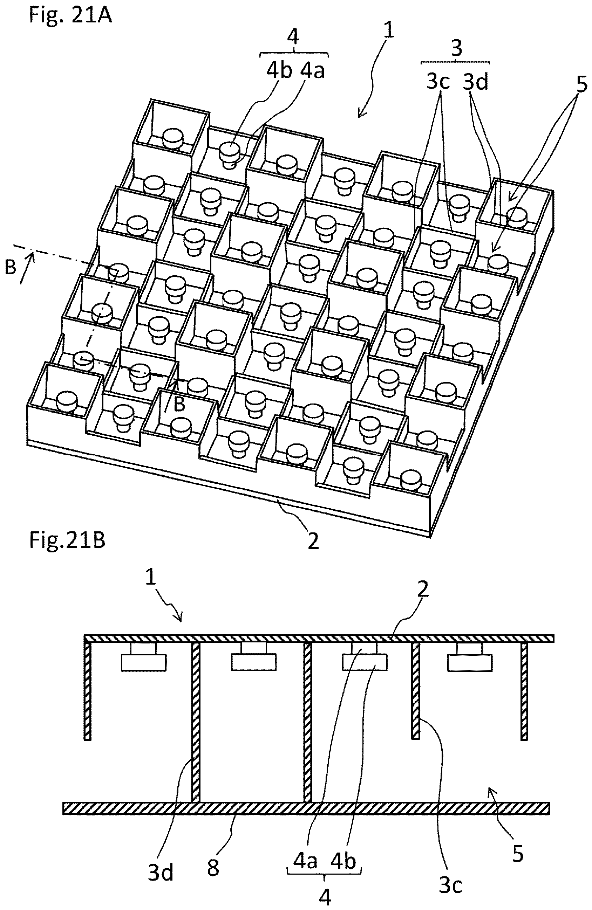

Sound insulation structure 1 of Working Example 11 shown in FIGs. 21A and 21B has the same structure as the modification of the first embodiment shown in FIGs. 3A and 3B. FIG. 21A is a perspective view of sound insulation structure 1. FIG. 21B is a cross-sectional view taken along line B-B. Membrane part 2 and weight parts 4 in this working example were the same as membrane part 2 and weight parts 4 in Working Example 9, but in this working example, some of the multiple support wall parts, specifically support wall parts 3d, had a height extending in the direction perpendicular to membrane part 2 that was greater than that of other support wall parts 3c. That is, sound insulation structure 1 of this working example included support wall parts 3d (some of the support wall parts) that were as tall as support wall part 3 of Working Example 10 and support wall parts 3c (other support wall parts) that were as short as support wall part 3 of Working Example 9. Specifically, support wall parts 3c were made of EPDM having a durometer A hardness of 30 according to JIS K6253, a plate thickness of 1.6 mm, and a height of 10 mm in the direction perpendicular to membrane part 2. Support wall parts 3d were made of EPDM having a durometer A hardness of 30 according to JIS K6253, a plate thickness of 1.6 mm, and a height of 15 mm in the direction perpendicular to membrane part 2. Support wall parts 3d had a height 1.5 times that of support wall parts 3c. As shown in FIGs. 21A and 21B, in this working example, rows in which tall support wall parts 3d were arranged and rows in which only short support wall parts 3c were arranged were positioned alternately. As a result, of the 49 square compartments 5 arranged in a 7×7 grid, 16 compartments 5 were compartments surrounded by tall support wall parts 3d. The area density of this construction was 3.02 kg/m². The end surface of support wall parts 3d of sound insulation structure 1 opposite the side attached to membrane part 2 was mounted on 0.8 mm-thick iron plate 8 to measure the sound insulation performance, which is shown in FIG. 14I.

### [Working Example 12]

Sound insulation structure 1 (not shown) of Working Example 12 had the same structure as the modification of the first embodiment shown in FIGs. 3A and 3B. Weight parts 4 of this working example were the same as weight parts 4 of Working Example 8. Membrane part 2 and support wall part 3 of this working example had a dynamic storage modulus (E') of 7.81 and a loss tangent (tan δ) of 0.06 MPa at 23 degrees C and at a frequency of 1 Hz. The dynamic storage modulus (E') was 8.62 MPa and the loss tangent (tan δ) was 0.08 at 23 degrees C and at a frequency of 10 Hz. The dynamic storage modulus (E') was 9.19 MPa and the loss tangent (tan δ) was 0.11 at 23 degrees C and at a frequency of 100 Hz. The dynamic storage modulus (E') was 10.3 MPa and the loss tangent (tan δ) was 0.08 at 23 degrees C and at a frequency of 1000 Hz. Durometer A hardness was 50 according to JIS K6253. The thickness of membrane part 2 was 1.0 mm. The plate thickness of support wall part 3 of 1.2 mm, the height in the direction perpendicular to membrane part 2 was 10 mm. Membrane part 2 and support wall part 3 were formed by integral molding of a styrene-based thermoplastic elastomer (TPS). The area density of this construction was 2.56 kg/m². The end surface of support wall part 3 of sound insulation structure 1 opposite the side attached to membrane part 2 was mounted on 0.8 mm-thick iron plate 8 to measure the sound insulation performance, which is shown in FIG. 14J.

### [Working Example 13]

Sound insulation structure 1 (not shown) of Working Example 13 had the same structure as the modification of the first embodiment shown in FIGs. 3A and 3B. Membrane part 2 and support wall part 3 of this working example were the same as membrane part 2 and support wall part 3 of Working Example 12. Weight parts 4 in this working example were composed of small-diameter circular cylindrical spring parts 4a and large-diameter circular cylindrical mass parts 4b. Spring parts 4a that are the portion of weight parts 4 that are attached to membrane part 2 were circular cylindrical with a diameter of 6 mm and a height (dimension in the direction perpendicular to membrane part 2) of 3 mm. The dynamic storage modulus (E') was 0.19 MPa and the loss tangent (tan δ) was 0.03 at 23 degrees C and at a frequency of 1 Hz. The dynamic storage modulus (E') was 0.19 MPa and the loss tangent (tan δ) was 0.04 at 23 degrees C and at a frequency of 10 Hz. The dynamic storage modulus (E') was 0.19 MPa and the loss tangent (tan δ) was 0.25 at 23 degrees C and at a frequency of 100 Hz. The dynamic storage modulus (E') was 0.23 MPa and the loss tangent (tan δ) was 0.04 at 23 degrees C and at a frequency of 1000 Hz. Spring part 4a was made of TPS having a durometer A hardness of 0 according to JIS K6253. Mass parts 4b that are the portion of weight parts 4 opposite the side attached to membrane part 2 were circular cylindrical with a diameter of 11 mm and a height of 6 mm and were made of EPDM having a durometer A hardness of 70 according to JIS K6253-3. The area density of this construction is 2.50 kg/m². The end surface of support wall part 3 of sound insulation structure 1 opposite to the side attached to membrane part 2 was mounted on 0.8 mm-thick iron plate 8 to measure the sound insulation performance, which is shown in FIG. 14J.

### [Working Example 14]

Sound insulation structure 1 (not shown) of Working Example 13 had the same structure as the modification of the first embodiment shown in FIGs. 3A and 3B. Membrane part 2 and support wall part 3 of this working example were the same as membrane part 2 and support wall part 3 of Working Example 12. Weight parts 4 in this working example were composed of small-diameter circular cylindrical spring parts 4a and large-diameter circular cylindrical mass parts 4b. Spring parts 4a that are the portions of the weight parts 4 that are attached to membrane part 2 were circular cylindrical with a diameter of 6 mm and a height (dimension in the direction perpendicular to membrane part 2) of 3 mm. Mass parts 4b that are the portions of weight parts 4 opposite the side attached to membrane part 2 were circular cylindrical with a diameter of 9 mm and a height of 6 mm. Spring parts 4a and mass parts 4b of weight parts 4 in this working example had a dynamic storage modulus (E') of 0.21 MPa and a loss tangent (tan δ) of 0.04 at 23 degrees C and at a frequency of 1 Hz. The dynamic storage modulus (E') was 0.23 MPa and the loss tangent (tan δ) was 0.03 at 23 degrees C and at a frequency of 10 Hz. The dynamic storage modulus (E') was 0.29 MPa and the loss tangent (tan δ) was 0.05 at 23 degrees C and at a frequency of 100 Hz. The dynamic storage modulus (E') was 0.25 MPa and the loss tangent (tan δ) was 0.17 at 23 degrees C and at a frequency of 1000 Hz. These parts were made of TPS having a durometer A hardness of 5 according to JIS K6253. The area density of this construction was 2.50 kg/m². The end surface of support wall part 3 of sound insulation structure 1 opposite the side attached to membrane part 2 was mounted on 0.8 mm-thick iron plate 8 to measure the sound insulation performance, which is shown in FIG. 14J.

### [Comparative Example 5]

In Comparative Example 5, similar to Comparative Example 3, a sound insulation structure consisting only of membrane part 2 and support wall part 3 was mounted on 0.8 mm-thick iron plate 8 as shown in FIGs. 16A and 16B, and the sound insulation was measured. The relationship between the 1/3 octave band center frequency and the sound transmission loss is shown in FIG. 14J. Membrane part 2 and support wall part 3 of this example were different from membrane part 2 and support wall part 3 of Working Example 1 and Comparative Example 3 but were the same as membrane part 2 and support wall part 3 of Working Example 12. The sound insulation structure of this comparative example did not have weight parts 4. The area density of this construction was 1.88 kg/m².

### [Comparative Example 6]

Sound insulation structure 1 (not shown) of Comparative Example 6 had the same structure as that of Working Example 1 but had membrane part 2 made of a resin material that was thinner than membrane part 2 of Working Example 1. Support wall part 3 and weight parts 4 of this example were the same as support wall part 3 and weight parts 4 of Working Example 1. Membrane part 2 of this comparative example was made of low-density polyethylene (LDPE) having a membrane thickness of 0.05 mm. The area density of this construction was 2.25 kg/m². The end surface of support wall part 3 of sound insulation structure 1 opposite the side attached to membrane part 2 was mounted on 0.8 mm-thick iron plate 8 to measure the sound insulation, which is shown in FIG. 14K.

### [Results]

The results of comparing the above-described Working Examples 1 to 14 of the present invention with Comparative Examples 1 to 6 will next be described. Referring to FIG. 14A, the sound insulation effect is clearly improved by sound insulation structure 1 of the present invention. In sound insulation structure 1 of Working Example 1 in particular, a sound insulation effect significantly greater than the theoretical value based on the mass law (Comparative Example 2) was obtained in the frequency band higher than 630 Hz, demonstrating the great effect of the present invention. In comparison with Comparative Example 3, Working Example 1 that included weight parts 4 was found to have a greater sound insulation property in the frequency band lower than 1.25 kHz.

Referring to FIG. 14B, similarly good sound insulation effects were obtained with both sound insulation structure 1 of the first embodiment (Working Example 1) of the present invention and sound insulation structure 6 of the second embodiment (Working Examples 2 and 3). In addition, when each weight part 4 itself constitutes a spring mass resonator as in Working Example 1, particularly good sound insulation was obtained near frequencies at which vibration of membrane part 2 is reduced by the resonance of the spring mass resonator (e.g., 630 Hz to 1000 Hz). On the other hand, when the spring mass resonator was formed by weight parts 7 and membrane part 2 as in Working Examples 2 and 3, the frequency band in which sound insulation is particularly good can be adjusted by means of the weight of weight parts 7. For example, when weight parts 7 had a mass similar to that of weight parts 4 in Working Example 1, the frequency band in which sound insulation is particularly good is close to 1000 Hz, and by making weight parts 7 lighter, the frequency band in which sound insulation is particularly good can be shifted toward higher frequencies.

As shown in FIG. 14C, the sound-insulating effect is low if support wall part 3 of the sound insulation structure is not made of a flexible material, but a good sound-insulating effect can be obtained if the support wall part 3 is made of a flexible material. This effect is thought to occur because vibrations are easily transmitted to membrane part 2 via support wall part 3 if support wall part 3 is made of a hard material rather than a flexible material, whereas vibrations are less likely to be transmitted to membrane part 2 via support wall part 3 if support wall part 3 is made of a flexible material. The frequency band in which sound insulation is particularly good can be adjusted by adjusting the hardness of support wall part 3. For example, by making support wall part 3 softer, the frequency band in which sound insulation is particularly good can be shifted toward lower frequencies.

As shown in FIG. 14D, the sound-insulating properties are somewhat reduced if membrane part 2 of the sound insulation structure is too soft. This effect is believed to occur because vibrations sufficient for the spring mass resonator to function adequately are not transmitted to the spring mass resonator if the membrane part 2 is too soft.

As shown in FIG. 14E, the sound-insulating performance is somewhat reduced if each compartment 5 of membrane part 2 defined by support wall part 3 of the sound insulation structure is too large. It is believed that the spring mass resonator will not function adequately and the vibration reduction effect will be reduced if each compartment 5 is too large. Therefore, each compartment 5 is preferably relatively small (for example, 1000 mm² or less).

As shown in FIG. 14F, even if the material and shape of weight parts 4 of sound insulation structure 1 are different, the sound-insulating function of the present invention will be exhibited as long as the material and shape are within the preferred ranges. The material and shape of components such as weight parts 4 can clearly be freely set within the preferred range.

As shown in FIG. 14G, similar sound insulation effects can be obtained even if the durometer A hardness according to JIS K6253-3 of support wall part 3 differs to some extent. Referring to FIG. 14H, a good sound insulation effect is obtained by configuring support wall part 3 such that the height extending in the direction perpendicular to membrane part 2 is large. This effect is achieved because higher support wall part 3 increases the thickness of the air layer located between the support surface (iron plate 8 in each working example) on which sound insulation structures 1 and 6 are mounted and membrane part 2, and this increased air layer changes the frequency band of the resonant transmission of air, reduces the effect of the inhibition of sound insulation in the targeted frequency band, and increases the sound insulation especially in the low frequency range (for example, around 500 Hz).

As shown in Figure 14I, a good sound insulation effect can be obtained even if only some of multiple support wall parts 3d have increased height extending in the direction perpendicular to membrane part 2 while the height of other support wall parts 3c is low. Even if only some of support wall parts 3d are tall, the thickness of the air layer located between the support surface (iron plate 8 in each working example) on which sound insulation structures 1 and 6 are mounted and membrane part 2 is increased, just as in a configuration in which all of the support wall parts 3d are tall. Therefore, as described above, the sound insulation effect increases especially in the low frequency range (for example, around 500 Hz). Furthermore, by increasing the height of some of support wall parts 3d, the thickness of the air layer can be increased while also suppressing an increase in the overall weight of sound insulation structures 1 and 6, and these sound insulation structures 1 and 6 can be easily and stably mounted on support surfaces of various shapes, including curved surfaces. In other words, lightweight sound insulation structures 1 and 6 can be provided that have good sound insulation properties in the low frequency range. Too few tall support walls 3d will complicate the stable support of sound insulation structures 1 and 6, and too many tall support walls 3d will increase the overall weight of sound insulation structures 1 and 6. Therefore, compartments 5 surrounded by tall support wall parts 3d preferably accounts for 5% or more of all compartment 5 of sound insulation structures 1 and 6. Furthermore, when viewing a cross section of each of support wall parts 3c and 3d parallel to the membrane 2, the total cross-sectional area of taller support wall parts 3d is preferably 10% or more of the total cross-sectional area of all support wall parts 3c and 3d of sound insulation structure 1 and 6. In Working Example 11, 7 × 7 = 49 compartments 5 are provided in an area of 20 mm × 20 mm (area 400 cm²) of membrane part 2 that has a square planar shape of 25 mm × 25 mm, as shown in Figure 21A. Of these 49 compartments 5, 16 compartments 5 are surrounded by high support wall parts 3d, this proportion being 32.6% and within the preferable range.

Incidentally, even when all support wall parts 3 are high as in Working Example 10 or when only some of support wall parts 3d are high as in Working Example 11, the overall height of sound insulation structures 1 and 6 is preferably kept at 20 mm or less, as described above, in order to suppress increase in the overall weight of sound insulation structures 1 and 6 as well as to prevent restrictions on installation.

As shown in to FIG. 14J, the provision of weight parts 4 obtains good sound insulation even if membrane part 2 and support wall part 3 are formed by integral molding of a thermoplastic material. In a spring-mass resonator consisting of spring part 4a and mass part 4b of weight part 4 as in Working Example 13, making spring part 4a softer can be seen to shift the resonant frequency toward lower frequencies and allows a large sound insulation effect to be obtained on the low frequency side. By changing the configuration of weight parts 4 in this manner enables adjustment of the sound insulation frequency band. Moreover, good sound insulation properties can be obtained even when weight parts 4 are made of a single material as in Working Example 14. Productivity can therefore be improved by manufacturing weight parts from a single material.

As shown in FIG. 14K, sound insulation properties will deteriorate if membrane part 2 is made of a thin resin material (membrane), and membrane part 2 therefore should have a certain degree of thickness. A resin material such as LDPE used in Comparative Example 6 is harder than an elastomer material such as EPDM used in Working Example 1, and the membrane thickness should therefore be reduced. However, membrane part 2 will be too soft unless the membrane thickness is greater than a certain degree, and vibrations sufficient to allow the spring-mass resonator that consists of spring part 4a and mass part 4b of weight part 4 to function adequately will not be transmitted to weight part 4. Therefore, membrane part 2 should have a certain degree of thickness.

### [Soundproof Structure]

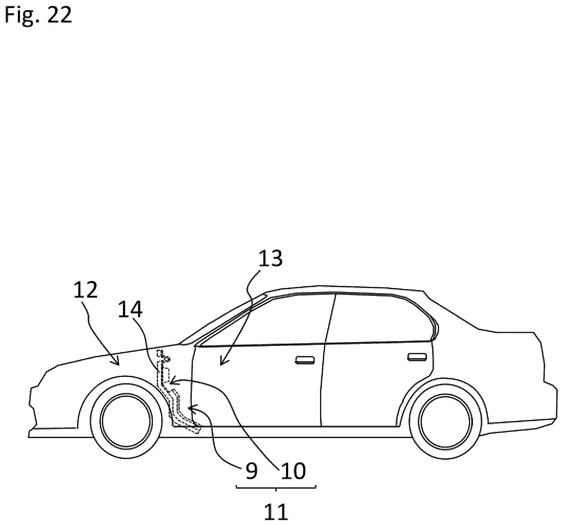

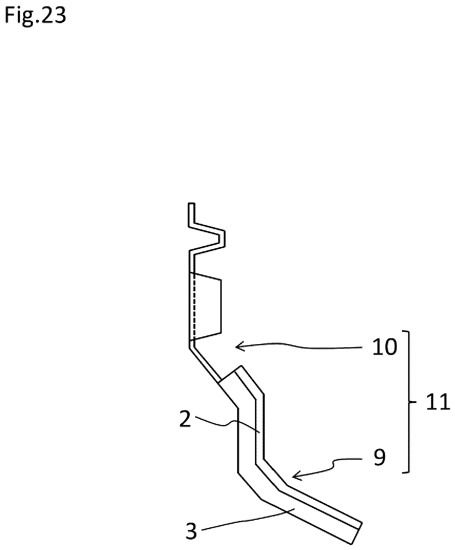

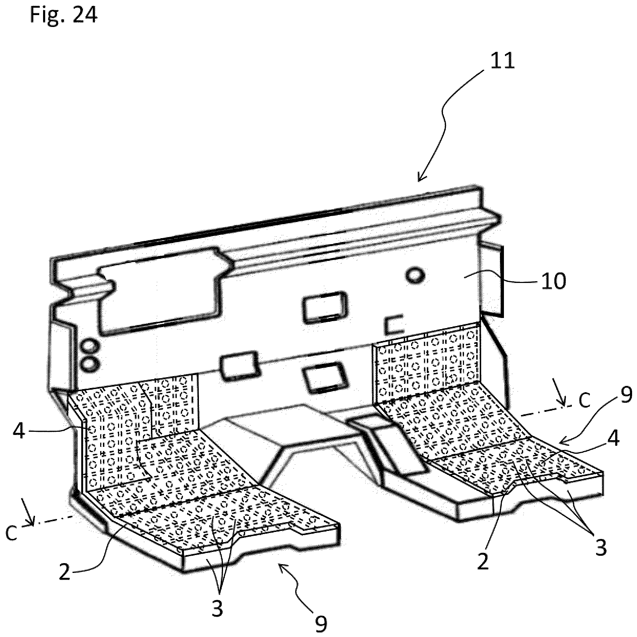

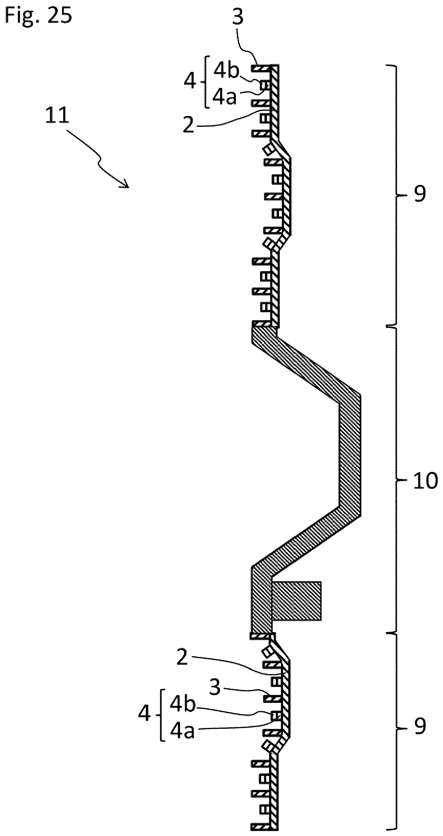

Soundproof structure 11 that includes sound insulation structures 1 and 6 of the present invention described above, that has improved soundproofing properties, and that is easier to install will next be described. First, FIG. 22 shows a side view of an automobile that is an example of a vehicle equipped with this soundproof structure 11. Soundproof structure 11 of the present invention is disposed so as to cover panel (dash panel) 14 provided at the boundary between engine compartment 12 and passenger compartment 13 of the automobile. A side view of this soundproof structure 11 is shown in FIG. 23, and its perspective view as viewed from the front is shown in FIG. 24. A cross-sectional view taken along line C-C of FIG. 24 is shown in FIG. 25. Soundproof structure 11 is composed of soundproof plate part 10 and sound insulation part 9 positioned side by side in a plane. This sound insulation part 9 has the same configuration as either of sound insulation structures 1 and 6 of the present invention described above. That is, sound insulation part 9 is formed of either sound insulation structure 1 or 6 of the present invention described above. In this example, large-area soundproof plate portion 10 and two sound insulation part 9 are formed integrally or joined together to form soundproof structure 11 that can be handled as a single component.

Soundproof plate part 10 has a single-layer structure consisting of either a layer of sound-absorbing material such as felt, polyurethane foam, glass wool, and so on, or a layer of sound insulation material such as a resin membrane, rubber sheet, and so on, or has a laminated structure of these layers. Soundproof plate part 10 is a plate-like member shaped to fit panel 14 and may have different thicknesses depending on the location. As an example, soundproof plate part 10 has a thickness ranging from a thin portion less than 5 mm to a thick portion of about 40 mm. Soundproof plate part 10 may have a configuration substantially the same as or similar to the dash silencers described in Patent Documents 1 and 2.

An example of sound insulation part 9 has the same configuration as sound insulation structure 1 shown in FIGs. 1A to 2B. That is, sound insulation part 9 is composed of sound insulation structure 1 of the present invention described above. This sound insulation part 9 has elastic sheet-like membrane part 2, elastic support wall part 3 standing substantially perpendicular from membrane part 2, and elastic weight parts 4 standing substantially perpendicular from membrane part 2. Each of s 4 located in respective compartments 5 constitutes a spring-mass resonator having elastic spring part 4a and mass part 4b having greater mass than spring part 4a. Since this sound insulation part 9 has the same configuration as sound insulation structure 1 shown in FIGs. 1A to 2B. As described above, the vibration of membrane part 2 is controlled by the action of the spring mass resonator formed by spring part 4a and mass part 4b of each weight part 4. In particular, membrane vibration is significantly reduced in a specific frequency range (for example, frequencies below 1000 Hz), whereby high sound insulation is achieved.

In this soundproof structure 11, sound insulation part 9 having the above-described configuration is disposed in, for example, a portion of a vehicle where sound propagation is particularly large. In the example shown in FIG. 22, soundproof structure 11 is disposed so as to cover panel 14 located at the boundary between engine compartment 12 and passenger compartment 13 of an automobile. Further, sound insulation parts 9 are disposed at two locations facing the front tires, these areas being subjected to particularly strong road noise. If entire soundproof structure 11 arranged so as to cover panel 14 were composed of sound insulation part 9 of the above-described configuration, the soundproofing effect would be high, but the weight of soundproof structure 11 would be large and could have an adverse effect on the performance of the vehicle. Instead, in soundproof structure 11 of this embodiment, sound insulation part 9, which has a particularly large soundproofing effect, is disposed in areas where sound propagation is large (for example, at positions facing the tires). In areas where sound propagation is not so great (areas other than positions facing the tires), soundproof plate parts 10 of a simple structure are disposed. This arrangement can efficiently prevent sound from entering while minimizing increase in weight. Furthermore, not only soundproof plate part 10, which is formed to match the shape of panel 14, but also sound insulation part 9 can be easily and stably installed on supporting surfaces of various shapes without the need for securement by adhesive or the like. Therefore, soundproof structure 11 of this embodiment can be layered and held stably on panel 14 that has a complex shape.

In this example, the area occupied by sound insulation part 9 on one of the main surfaces of soundproof structure 11 (the surface facing passenger compartment 13 that is the larger surface facing to the right in FIGs. 22 and 23 and that is mainly shown in FIG. 24), is preferably 5% or more and 95% or less of the entire area of soundproof structure 11, more preferably 10% or more and 40% or less, and even more preferably 20% or more and 30% or less. If the proportion of the area occupied by sound insulation part 9 is too small, the sound insulation performance of soundproof structure 11 that is equivalent to a dash silencer will no longer be sufficient. Furthermore, if the proportion of the area occupied by sound insulation part 9 is too large, the problem arises that noise propagating through soundproof structure 11 to the passenger compartment will be reflected by the instrument panel, and when this reflected noise hits the surface of soundproof structure 11 that is not laminated with sound-absorbing material and is again reflected, the sound pressure will increase and thus generate a muffled sound. In the examples shown in FIGs. 22 to 25, the area occupied by sound insulation part 9 is about 30% of the entire area of soundproof structure 11.

In this example, soundproof plate part 10 and sound insulation part 9 are integrated together. Specifically, soundproof plate part 10 constituted by a layer of soundproofing material (felt, urethane, glass wool, etc.) or a layer of sound-insulating material (resin membrane, rubber sheet, etc.) is integrally molded with at least one of membrane part 2 and support wall part 3 of sound insulation part 9 by insert molding or the like, or is joined to at least one of membrane part 2 and support wall part 3 of sound insulation part 9 by ultrasonic welding, adhesion by a hot melt adhesive, or securing by clips, bolts or rivets. Soundproof structure 11 consisting of soundproof plate part 10 and sound insulation part 9 can therefore be easily handled.

As described above, in soundproof structure 11 of the present invention, not only soundproof plate part 10 but also sound insulation part 9 is extremely thin and lightweight and can be easily mounted on a curved or uneven surface. Therefore, soundproof structure 11 is suitable for use when mounted on a panel (e.g., panel 14 shown in FIGs. 1A-1B) of a vehicle, particularly of an automobile. An example of a panel on which the soundproof structure 11 is mounted may be the same as the panel on which sound insulation structures 1 and 6 described above are mounted. The arrangement, position, and usage of soundproof structure 11 may be similar to the arrangement, position, and usage of the sound insulation structures 1 and 6 described above.

Soundproof structure 11 of the present invention includes sound insulation part 9 having the same configuration as sound insulation structures 1 and 6 illustrated in the above-described Working Examples 1 to 14 and additionally includes soundproof plate part 10. Therefore, the differences in the sound insulation properties of sound insulation structures 1 and 6 of Working Examples 1 to 14 can be considered as representing the differences in the sound insulation properties of each soundproof structure 11. Furthermore, as mentioned above, sound insulation structures 1 and 6 of Working Examples 1 to 14 have greater sound insulation properties than the structures of Comparative Examples 1 to 6, and in addition, soundproof structure 11 of the present invention can be considered to exhibit even better soundproofing properties because it is equipped with soundproof plate part 10.

The present invention includes the following configurations and methods:
[1] A sound insulation structure comprising an elastic membrane part, an elastic support wall part standing on the membrane part, and weight parts standing on the membrane part, characterized in that:
   the membrane part is divided into a plurality of compartments by the support wall part;
   the weight parts are located inside some or all of the plurality of compartments;
   in the compartments in which the weight parts are located, one weight part is disposed in one compartment;
   the height of the support wall part extending in a direction perpendicular to the membrane part is greater than the height of the weight parts extending in the direction perpendicular to the membrane part; and
   each of the weight parts constitutes a spring mass resonator having a spring part having elasticity and a mass part having a mass greater than that of the spring part.
[2] The sound insulation structure according to [1], wherein the membrane part, the support wall part, and the spring parts are all made of either a material that has rubber elasticity but no energy elasticity, a material that has energy elasticity but no rubber elasticity, or a material that has both rubber elasticity and energy elasticity.
[3] The sound insulation structure according to [1] or [2], wherein the membrane part, the support wall part and the spring parts all have a dynamic storage modulus that is not less than 0.01 MPa and not more than 100 MPa at 23 degrees C and at a frequency of 1 Hz to 1000 Hz.
[4] The sound insulation structure according to any one of [1] to [3], wherein the membrane part, the support wall part, and the spring parts all have a loss tangent that is not less than 0.01 and not more than 0.50 at 23 degrees C and at a frequency of 1 Hz to 1000 Hz.
[5] The sound insulation structure according to any one of [1] to [4], wherein the spring part of each weight part is located on the side to which the membrane part is attached, and the mass part is located on the side opposite the side to which the membrane part is attached.
[6] The sound insulation structure according to any one of [1] to [5], wherein the mass part of each weight part has a larger volume than the spring part.
[7] The sound insulation structure according to any one of [1] to [6], wherein the mass part of each weight part is made of a material having a higher density than the spring part.
[8] A sound insulation structure comprising an elastic membrane part, an elastic support wall part standing on the membrane part, and weight parts standing on the membrane part, characterized in that:
   the membrane part is divided into a plurality of compartments by the support wall part;
   the weight parts are located inside some or all of the plurality of compartments;
   in the compartments in which the weight parts are located, one weight part is disposed in one compartment;
   the height of the support wall part extending in a direction perpendicular to the membrane part is greater than the height of the weight parts extending in the direction perpendicular to the membrane part; and
   a spring-mass resonator is formed by the membrane part as a spring part and by the weight part as a mass part.
[9] The sound insulation structure according to [8], wherein both the membrane part and the support wall part are made of either a material that has rubber elasticity but no energy elasticity, a material that has energy elasticity but no rubber elasticity, or a material that has both rubber elasticity and energy elasticity.
[10] The sound insulation structure according to [8] or [9], wherein both the membrane part and the support wall part have a dynamic storage modulus that is not less than 0.01 MPa and not more than 100 MPa at 23 degrees C and at a frequency of 1 Hz to 1000 Hz.
[11] The sound insulation structure according to any one of [8] to [10], wherein both the membrane part and the support wall part have a loss tangent that is not less than 0.01 and not more than 0.50 at 23 degrees C and at a frequency of 1 Hz to 1000 Hz.
[12] The sound insulation structure according to any one of [1] to [11], wherein the support wall part includes a plurality of first wall parts extending in a direction perpendicular to the membrane part and extending in a first direction parallel to the membrane part, and a plurality of second wall parts extending in a direction perpendicular to the membrane part and extending in a second direction perpendicular to the first direction.
[13] The sound insulation structure according to any one of [1] to [11], wherein the support wall part is in the form of a circular cylinder having a circular, elliptical, or oval cross section that defines each of the compartments, or in the form of a polygonal cylinder having a polygonal cross section that defines each of the compartments.
[14] The sound insulation structure according to any one of [1] to [13], wherein the area of each of the compartments is not less than 100 mm² and not more than 1000 mm².
[15] The sound insulation structure according to any one of [1] to [14], wherein the number of the compartments is 10 to 1000 per 1000 cm² of the area of the membrane part.
[16] The sound insulation structure according to [15], wherein the number of the compartments is 50 to 500 per 1000 cm² of the area of the membrane part.
[17] The sound insulation structure according to any one of [1] to [16], wherein the plate thickness of the support wall part is not less than 0.5 mm and not more than 5.0 mm.
[18] The sound insulation structure according to [17], wherein the plate thickness of the support wall part is not less than 1.0 mm and not more than 3.0 mm.
[19] The sound insulation structure according to any one of [1] to [18], wherein the thickness of the membrane part is 0.1 mm or more and 3.0 mm or less.
[20] The sound insulation structure according to any one of [1] to [19], wherein the height in the direction perpendicular to the membrane part is 5 mm or more and 20 mm or less.
[21] The sound insulation structure according to any one of [1] to [20], wherein the height of the support wall part extending in the direction perpendicular to the membrane part is 5 mm or more and 20 mm or less.
[22] The sound insulation structure according to [21], wherein the support wall part has a height extending in the direction perpendicular to the membrane part that is not less than 10 mm and not more than 20 mm.
[23] The sound insulation structure according to any one of [1] to [22], comprising a plurality of the support wall parts, wherein some of the support wall parts have a height extending in the direction perpendicular to the membrane part that is greater than the height of the other support wall parts.
[24] The sound insulation structure according to [23], wherein the height of the support wall parts that are tall extending in the direction perpendicular to the membrane part is greater than 10 mm and is not greater than 20 mm, and the other support wall parts have a height of 10 mm or less.
[25] The sound insulation structure according to any one of [1] to [24], wherein the height of the weight parts extending in the direction perpendicular to the membrane part is 1 mm or more.
[26] The sound insulation structure according to any one of [1] to [25], wherein the membrane part has a durometer A hardness of 30 or more, and the support wall part has a durometer A hardness of 1 or more and 90 or less.
[27] A soundproof structure comprising a soundproof plate part and a sound insulation part, characterized in that:
   the soundproof plate part is a plate member made of a sound-absorbing material or sound insulation material;
   the sound insulation part comprises the sound insulation structure according to any one of [1] to [26]; and
   at least one of the membrane part and the support wall part is formed integrally with or is joined to the soundproof plate part such that the soundproof plate part and the sound insulation part are positioned side by side in a plane.
[28] The soundproof structure according to [27], wherein the area occupied by the sound insulation part on the main surface of the soundproof structure is 5% to 95% of the area of the entire soundproof structure.
[29] The soundproof structure according to [27] or [28], wherein at least one of the membrane part and the support wall part is integrally formed with the soundproof plate part by insert molding or is joined to the soundproof plate part by ultrasonic welding, bonding by a hot melt adhesive, or securing by a clip, bolt or rivet.
[30] The soundproof structure according to any one of [27] to [29], wherein the soundproof plate part has a single-layer structure consisting of either a layer made of felt, urethane, or glass wool, or a layer made of a resin membrane or a rubber sheet, or has a multilayer structure in which these layers are laminated.
[31] The soundproof structure according to any one of [27] to [30], wherein the soundproof structure is attached to a panel inside an automobile.
[32] The soundproof structure according to [31], wherein the soundproof structure is attached to a dash panel, and the sound insulation part is provided at each of positions that face tires of an automobile.

### Explanation of Reference Numerals

- 1, 6: sound insulation structure
- 2: membrane part
- 3: support wall part
- 3a: first wall part
- 3b: second wall part
- 3c: low support wall parts (other support wall parts)
- 3d: high support wall parts (some support wall parts)
- 4, 7: weight part
- 4a: spring part
- 4b: mass part
- 5: compartment
- 8: iron plate
- 9: sound insulation part
- 10: soundproof plate part
- 11: soundproof structure
- 12: engine compartment
- 13: passenger compartment
- 14: panel (dash panel)

## Claims

1. A sound insulation structure comprising an elastic membrane part, an elastic support wall part standing on the membrane part, and weight parts standing on the membrane part, **characterized in that**:
the membrane part is divided into a plurality of compartments by the support wall part;
the weight parts are located inside some or all of the plurality of compartments;
in the compartments in which the weight parts are located, one weight part is disposed in one compartment;
the height of the support wall part extending in a direction perpendicular to the membrane part is greater than the height of the weight parts extending in the direction perpendicular to the membrane part; and
each of the weight parts constitutes a spring mass resonator having a spring part having elasticity and a mass part having a mass greater than that of the spring part.

2. The sound insulation structure according to claim 1, wherein the membrane part, the support wall part, and the spring parts are all made of either a material that has rubber elasticity but no energy elasticity, a material that has energy elasticity but no rubber elasticity, or a material that has both rubber elasticity and energy elasticity.

3. The sound insulation structure according to claim 1 or 2, wherein the membrane part, the support wall part and the spring parts all have a dynamic storage modulus that is not less than 0.01 MPa and not more than 100 MPa at 23 degrees C and at a frequency of 1 Hz to 1000 Hz.

4. The sound insulation structure according to claim 3, wherein the membrane part, the support wall part, and the spring parts all have a loss tangent that is not less than 0.01 and not more than 0.50 at 23 degrees C and at a frequency of 1 Hz to 1000 Hz.

5. The sound insulation structure according to claim 1 or 2, wherein the spring part of each weight part is located on the side to which the membrane part is attached, and the mass part is located on the side opposite the side to which the membrane part is attached.

6. The sound insulation structure according to claim 5, wherein the mass part of each weight part has a larger volume than the spring part.

7. The sound insulation structure according to claim 1 or 2, wherein the mass part of each weight part is made of a material having a higher density than the spring part.

8. A sound insulation structure comprising an elastic membrane part, an elastic support wall part standing on the membrane part, and weight parts standing on the membrane part, **characterized in that**:
the membrane part is divided into a plurality of compartments by the support wall part;
the weight parts are located inside some or all of the plurality of compartments;
in the compartments in which the weight parts are located, one weight part is disposed in one compartment;
the height of the support wall part extending in a direction perpendicular to the membrane part is greater than the height of the weight parts extending in the direction perpendicular to the membrane part; and
a spring-mass resonator is formed by the membrane part as a spring part and by the weight part as a mass part.

9. The sound insulation structure according to claim 8, wherein both the membrane part and the support wall part are made of either a material that has rubber elasticity but no energy elasticity, a material that has energy elasticity but no rubber elasticity, or a material that has both rubber elasticity and energy elasticity.

10. The sound insulation structure according to claim 8 or 9, wherein both the membrane part and the support wall part have a dynamic storage modulus that is not less than 0.01 MPa and not more than 100 MPa at 23 degrees C and at a frequency of 1 Hz to 1000 Hz.

11. The sound insulation structure according to claim 10, wherein both the membrane part and the support wall part have a loss tangent that is not less than 0.01 and not more than 0.50 at 23 degrees C and at a frequency of 1 Hz to 1000 Hz.

12. The sound insulation structure according to claim 1 or 8, wherein the support wall part includes a plurality of first wall parts extending in a direction perpendicular to the membrane part and extending in a first direction parallel to the membrane part, and a plurality of second wall parts extending in a direction perpendicular to the membrane part and extending in a second direction perpendicular to the first direction.

13. The sound insulation structure according to claim 1 or 8, wherein the support wall part is in the form of a circular cylinder having a circular, elliptical, or oval cross section that defines each of the compartments, or in the form of a polygonal cylinder having a polygonal cross section that defines each of the compartments.

14. The sound insulation structure according to claim 1 or 8, wherein the area of each of the compartments is not less than 100 mm² and not more than 1000 mm².

15. The sound insulation structure according to claim 1 or 8, wherein the number of the compartments is 10 to 1000 per 1000 cm² of the area of the membrane part.

16. The sound insulation structure according to claim 15, wherein the number of the compartments is 50 to 500 per 1000 cm² of the area of the membrane part.

17. The sound insulation structure according to claim 1 or 8, wherein the plate thickness of the support wall part is not less than 0.5 mm and not more than 5.0 mm.

18. The sound insulation structure according to claim 17, wherein the plate thickness of the support wall part is not less than 1.0 mm and not more than 3.0 mm.

19. The sound insulation structure according to claim 1 or 8, wherein the thickness of the membrane part is 0.1 mm or more and 3.0 mm or less.

20. The sound insulation structure according to claim 1 or 8, wherein the height in the direction perpendicular to the membrane part is 5 mm or more and 20 mm or less.

21. The sound insulation structure according to claim 1 or 8, wherein the height of the support wall part extending in the direction perpendicular to the membrane part is 5 mm or more and 20 mm or less.

22. The sound insulation structure according to claim 21, wherein the support wall part has a height extending in the direction perpendicular to the membrane part that is not less than 10 mm and not more than 20 mm.

23. The sound insulation structure according to claim 1 or 8, comprising a plurality of the support wall parts, wherein some of the support wall parts have a height extending in the direction perpendicular to the membrane part that is greater than the height of the other support wall parts.

24. The sound insulation structure according to claim 23, wherein the height of the support wall parts that are tall extending in the direction perpendicular to the membrane part is greater than 10 mm and is not greater than 20 mm, and the other support wall parts have a height of 10 mm or less.

25. The sound insulation structure according to claim 1 or 8, wherein the height of the weight parts extending in the direction perpendicular to the membrane part is 1 mm or more.

26. The sound insulation structure according to claim 1 or 8, wherein the membrane part has a durometer A hardness of 30 or more, and the support wall part has a durometer A hardness of 1 or more and 90 or less.

27. A soundproof structure comprising a soundproof plate part and a sound insulation part, **characterized in that**:
the soundproof plate part is a plate member made of a sound-absorbing material or sound insulation material;
the sound insulation part comprises the sound insulation structure according to claim 1; and
at least one of the membrane part and the support wall part is formed integrally with or is joined to the soundproof plate part such that the soundproof plate part and the sound insulation part are positioned side by side in a plane.

28. A soundproof structure comprising a soundproof plate part and a sound insulation part, **characterized in that**:
the soundproof plate part is a plate member made of a sound-absorbing material or sound insulation material;
the sound insulation part comprises the sound insulation structure according to claim 8; and
at least one of the membrane part and the support wall part is formed integrally with or is joined to the soundproof plate part such that the soundproof plate part and the sound insulation part are positioned side by side in a plane.

29. The soundproof structure according to claim 27 or 28, wherein the area occupied by the sound insulation part on the main surface of the soundproof structure is 5% to 95% of the area of the entire soundproof structure.

30. The soundproof structure according to claim 27 or 28, wherein at least one of the membrane part and the support wall part is integrally formed with the soundproof plate part by insert molding or is joined to the soundproof plate part by ultrasonic welding, bonding by a hot melt adhesive, or securing by a clip, bolt or rivet.

31. The soundproof structure according to claim 27 or 28, wherein the soundproof plate part has a single-layer structure consisting of either a layer made of felt, urethane, or glass wool, or a layer made of a resin membrane or a rubber sheet, or has a multilayer structure in which these layers are laminated.

32. The soundproof structure according to claim 27 or 28, wherein the soundproof structure is attached to a panel inside an automobile.

33. The soundproof structure according to claim 32, wherein the soundproof structure is attached to a dash panel, and the sound insulation part is provided at each of positions that face tires of an automobile.
